(19) Europäisches Patentamt / European Patent Office / Office européen des brevets

(11) **EP 3 787 171 B1**

(12) **EUROPEAN PATENT SPECIFICATION**

(45) Date of publication and mention
of the grant of the patent:
**30.11.2022   Bulletin 2022/48**

(21) Application number: **20192603.7**

(22) Date of filing: **25.08.2020**

(51) International Patent Classification (IPC):
**H02M 3/335** (2006.01)      **H02M 7/483** (2007.01)
**H02M 1/00** (2006.01)

(52) Cooperative Patent Classification (CPC):
**H02M 3/33523; H02M 3/01; H02M 3/33573;**
**H02M 7/483;** H02M 1/0058; H02M 7/4833;
Y02B 70/10

(54) **ISOLATED DC/DC CONVERTERS FOR WIDE OUTPUT VOLTAGE RANGE AND CONTROL METHODS THEREOF**

ISOLIERTE GLEICHSPANNUNGSWANDLER FÜR WEITEN AUSGANGSSPANNUNGSBEREICH UND STEUERVERFAHREN DAFÜR

CONVERTISSEURS CC/CC ISOLÉS POUR UNE LARGE GAMME DE TENSIONS DE SORTIE ET PROCÉDÉS DE COMMANDE ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.08.2019   US 201916551543**
**25.05.2020   US 202016882679**

(43) Date of publication of application:
**03.03.2021   Bulletin 2021/09**

(73) Proprietor: **Delta Electronics, Inc.**
**Neihu, Taipei 11491 (TW)**

(72) Inventors:
• **Zhang, Chi**
**Apex, NC 27502 (US)**
• **Barbosa, Peter**
**Durham, NC 27709 (US)**
• **Jiao, Yang**
**Cary, NC 27519 (US)**

(74) Representative: **Uexküll & Stolberg**
**Partnerschaft von**
**Patent- und Rechtsanwälten mbB**
**Beselerstraße 4**
**22607 Hamburg (DE)**

(56) References cited:
**CN-A- 102 611 310      US-A1- 2009 316 443**

• **JIAO YANG ET AL: "Topology Evaluation and Comparison for Isolated Multilevel DC/DC Converter for Power Cell in Solid State Transformer", 2019 IEEE APPLIED POWER ELECTRONICS CONFERENCE AND EXPOSITION (APEC), IEEE, 17 March 2019 (2019-03-17), pages 802-809, XP033555283, DOI: 10.1109/APEC.2019.8722253 [retrieved on 2019-05-24]**
• **WEI CHEN ET AL: "A Novel 200~800Vdc Ultra-wide Range Input Dc-Dc Converter with Optimum Intelligent Polymorphic Topologies", APPLIED POWER ELECTRONICS CONFERENCE AND EXPOSITION, 2009. APEC 2009. TWENTY-FOURTH ANNUAL IEEE, IEEE, PISCATAWAY, NJ, USA, 15 February 2009 (2009-02-15), pages 51-57, XP031442653, ISBN: 978-1-4244-2811-3**
• **LIU FUXIN ET AL: "Modified Three-Phase Three-Level DC/DC Converter With Zero-Voltage-Switching Characteristic-Adopting Asymmetrical Duty Cycle Control", IEEE TRANSACTIONS ON POWER ELECTRONICS, INSTITUTE OF ELECTRICAL AND ELECTRONICS ENGINEERS, USA, vol. 29, no. 12, 1 December 2014 (2014-12-01), pages 6307-6318, XP011556071, ISSN: 0885-8993, DOI: 10.1109/TPEL.2014.2303655 [retrieved on 2014-08-13]**

- **JIN FENG ET AL: "Multi-phase multi-level LLC resonant converter with low voltage stress on the primary-side switches", 2014 IEEE ENERGY CONVERSION CONGRESS AND EXPOSITION (ECCE), IEEE, 14 September 2014 (2014-09-14), pages 4704-4710, XP032680638, DOI: 10.1109/ECCE.2014.6954045 [retrieved on 2014-11-11]**

## Description

### FIELD OF THE INVENTION

This invention relates to power converters. More specifically, this invention relates to controlling a resonant DC/DC converter using various modulation schemes to attain regulation of an output voltage over a very wide voltage range.

### BACKGROUND OF THE INVENTION

Many power conversion applications (e.g., battery charging in electrical vehicles (EVs)) require a regulated output voltage over a wide voltage range. For example, a typical EV battery charger circuit has two converter stages: (i) a front-end AC/DC converter that provides either a fixed DC bus voltage or a variable DC bus voltage, and (ii) an isolated DC/DC converter that directly interfaces with the battery. The DC/DC converter is required to provide a regulated voltage over a wide voltage range under various load current conditions and the battery's state of charge. For example, the typical battery for a conventional EV has a voltage range between 240 volts to 460 volts. However, some premium passenger EVs, utility EVs, and electrical buses or semi-trucks have output battery voltage range between 500 volts and 950 volts. Thus, a DC/DC converter that can provide a regulated output voltage over a very wide output voltage range is desired, so as to accommodate the charging requirements at different battery voltage levels.

The LLC resonant converter topology has been widely used as an isolated DC/DC converter, due to its high efficiency, simple structure achieved by magnetic integration, soft switching on both primary and secondary switches, and capability suitable for applications with wide voltage ranges.

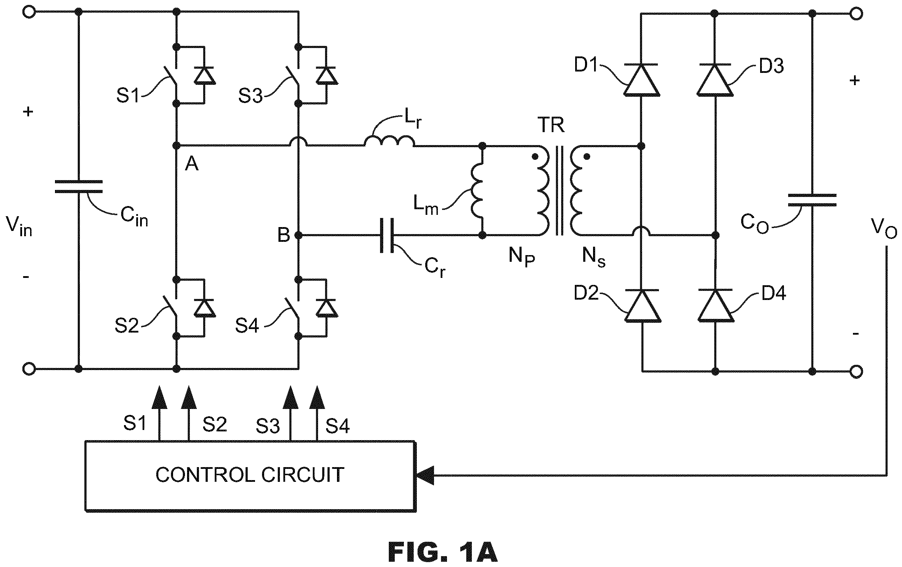

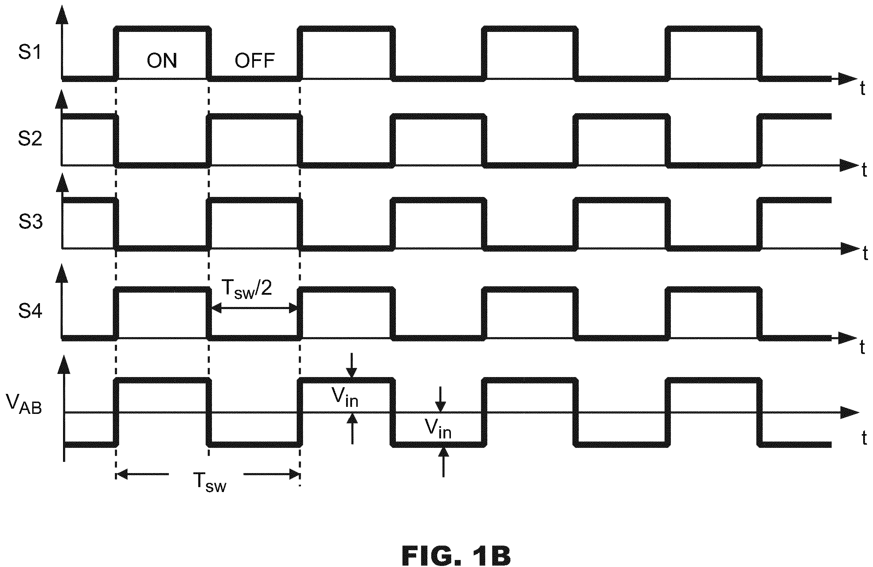

FIGs. 1A and 1B show, respectively, an exemplary conventional full-bridge LLC resonant converter under closed-loop voltage control, and its timing diagrams for switch control signals and primary-side full-bridge output voltage $V_{AB}$. Output voltage $V_o$ may be regulated by controlling the switching frequency of these primary-side switches. Highest efficiency is attained when the LLC resonant converter operates at the resonant frequency ($f_r$), which is determined by resonant inductor $L_r$ and resonant capacitor $C_r$, and when the DC voltage gain M equals the transformer's turns ratio $\frac{N_P}{N_S}$ , wherein $M$ equals $V_o/V_{in}$. DC voltage gain $M$ diminishes when the switching frequency ($f_{sw}$) is greater than resonant frequency $f_r$. Conversely, the gain M becomes greater when switching frequency $f_{sw}$ is less than resonant frequency $f_r$. Efficiency, however, always diminishes as switching frequency $f_{sw}$ moves away from resonant frequency $f_r$. To achieve a wide output voltage range, the LLC resonant converter operates at a very wide frequency range, which inevitably compromises its efficiency. Further, as the maximum and minimum DC voltage gains of the LLC resonant converter are determined by such circuit parameters as the ratio of magnetizing inductance $L_m$ to resonant inductance $L_r$, and by the load condition, the LLC resonant converter may be unable to achieve a very wide output voltage range under all load conditions.

For wide output voltage range applications, such as battery charging applications, the LLC resonant circuit parameters must carefully trade-off between efficiency and the output voltage range. In the prior art, many techniques for achieving a wide output voltage range have been developed, such as those disclosed in:

(a) "Design Methodology of LLC Resonant Converters for Electric Vehicle Battery Chargers," by J. Deng et al., published in the IEEE Transactions on Vehicular Technology, vol. 63, no. 4, pp. 1581-1592, May 2014;
(b) "An LLC Resonant DC-DC Converter for Wide Output Voltage Range Battery Charging Applications," by F. Musavi et al., published in IEEE Transactions on Power Electronics, vol. 28, no. 12, pp. 5437-5445, Dec. 2013;
(c) "A Design Procedure for Optimizing the LLC Resonant Converter as a Wide Output Range Voltage Source," by R. Beiranvand et al., published in the IEEE Transactions on Power Electronics, vol. 27, no. 8, pp. 3749-3763, Aug. 2012; and
(d) "Optimal Design Methodology for LLC Resonant Converter in Battery Charging Applications Based on Time-Weighted Average Efficiency," by Z. Fang et al., published in the IEEE Transactions on Power Electronics, vol. 30, no. 10, pp. 5469-5483, Oct. 2015.
(e) "Topology Evaluation and Comparison for Isolated Multilevel DC/DC Converter for Power Cell in Solid State Transformer", by Yang Jiao and Milan M. Jovanovic, published in the proceedings of the APPLIED POWER ELECTRONICS CONFERENCE AND EXPOSITION, APEC, pp. 802-809, March 2017.

Nevertheless, these techniques can only optimize the converter circuits to achieve a limited output voltage range (e.g., between 200 volts and 500 volts) in conventional EV charging applications.

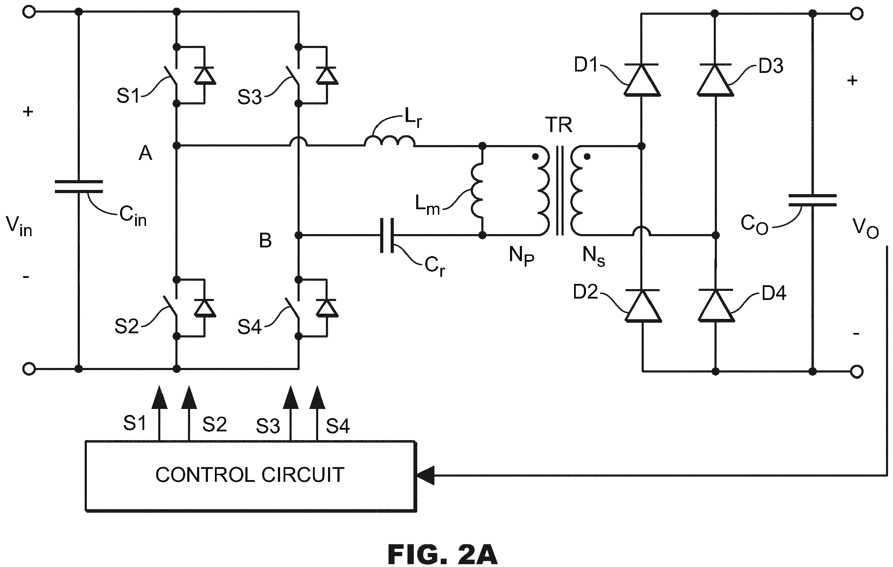

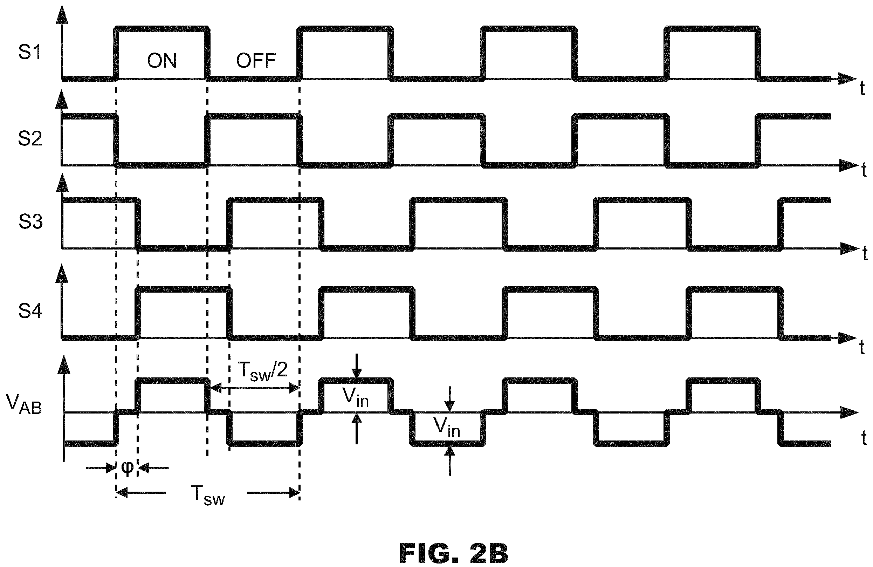

To achieve a wider output voltage range with good efficiency, modifications of circuit structures and control schemes have been proposed for a conventional LLC resonant converter. For example, the article "Multimode Optimization of the Phase-Shifted LLC Series Resonant Converter" ("Mumtahina") by U. Mumtahina and P. J. Wolfs, published in IEEE Transactions on Power Electronics, vol. 33, no. 12, pp. 10478-10489, Dec. 2018, discloses an LLC resonant converter that combines conventional frequency control and phase-shift control schemes to achieve a wide output voltage range. FIGs. 2A and 2B show, respectively, Mumtahina's full-bridge LLC resonant converter with closed-loop voltage control, and its timing diagrams under phase-shift control for switch control signals and primary-side full-bridge output voltage $V_{AB}$. Mumtahina teaches providing a phase shift between the two pairs of gate signals at the two legs of the primary side switches. Using both phase-shift control and switching frequency control, Mumtahina's LLC resonant converter operates at a lower switching frequency in a voltage step-down operation.

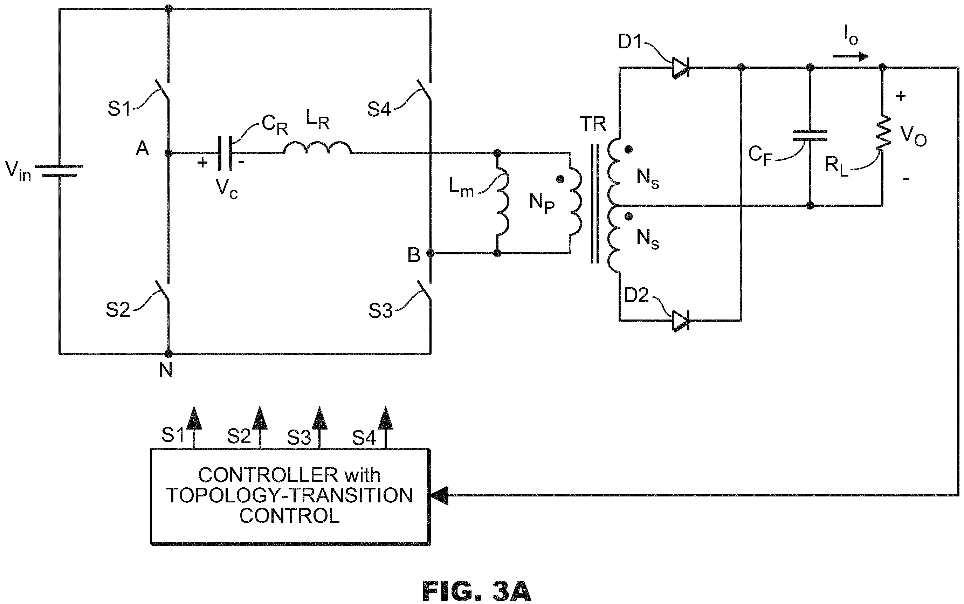

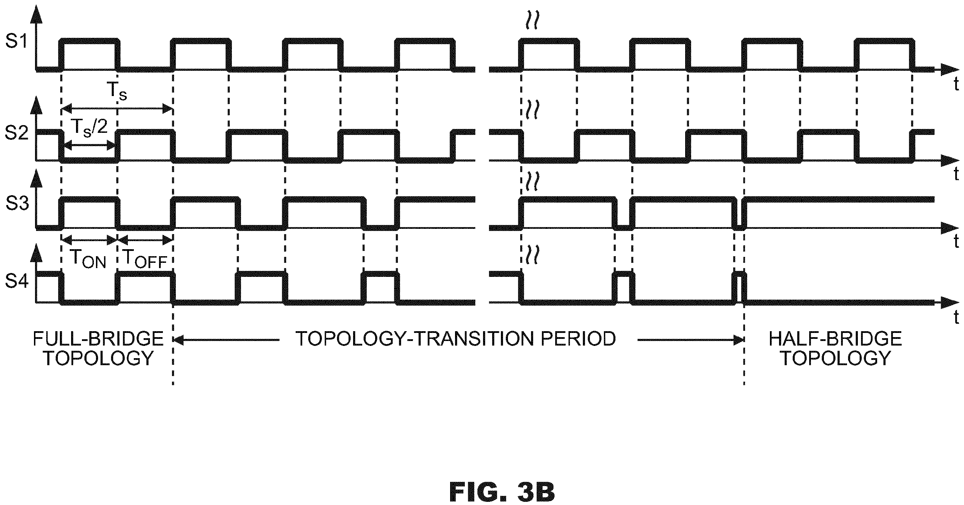

U.S. Patent 9,263,960 B2 ("Jovanovic") to M. Jovanovic and B. Irving, entitled "Power Converters for Wide Input or Output Voltage Range and Control Methods Thereof," granted on Feb. 16, 2016, discloses a topology-morphing control method for a full-bridge LLC circuit that operates under either a full-bridge or a half-bridge topology. FIGs. 3A and 3B show, respectively, Jovanovic's full-bridge LLC resonant converter under topology-morphing control, and its timing diagrams for switch control signals during a full-bridge to half-bridge topology transition. In Jovanovic, the circuit topology adapts to the control signals, which in return respond to the input or output operating conditions.

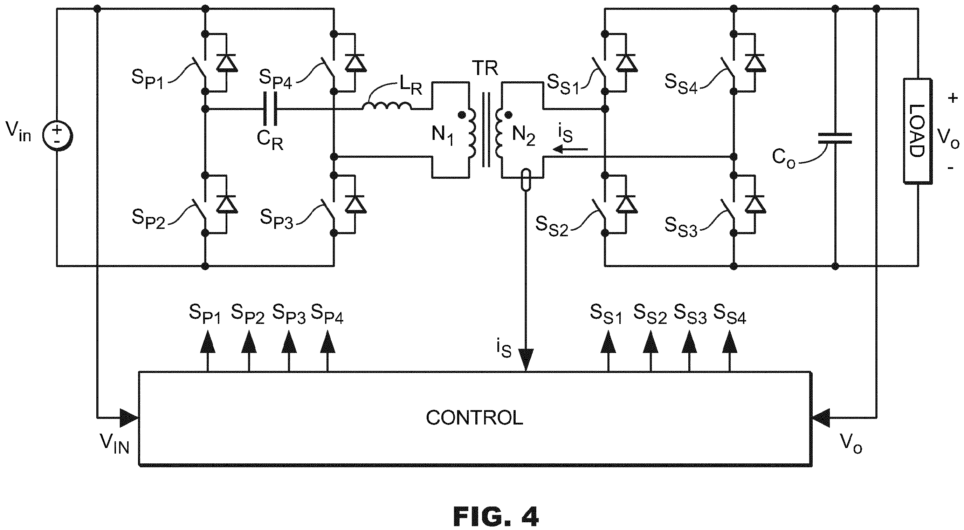

U.S. Patent Application Publication 2015/0229225A1 ("Jang") by Y. Jang and M. Jovanovic, entitled "Resonant Converter and Control Methods Thereof," filed on August 13, 2015, discloses a control scheme for a series resonant converter (SRC) that combines a variable-frequency control scheme with a delay-time control scheme. FIG. 4 is a circuit diagram for Jang's SRC. In Jang, a variable frequency control scheme is applied to the primary-side switches, while a delay-time control scheme is applied to the secondary-side switches. The result is a boost to the output voltage, thus achieving a wider output voltage range, under control of a narrower switching frequency range.

Many other variations in topologies and control schemes have been proposed for conventional LLC resonant converters to achieve wide output voltage ranges. However, these variations all have drawbacks, such as complexity in implementation, increased part count, or undesired dynamics. In addition, these variations still do not achieve a sufficiently wide output voltage range. For example, a 200-volt to 1000-volt EV fast-charger remains to be attained.

One challenge in achieving a wide output voltage range is that the input voltage to the LLC resonant converter must be high enough to avoid an undesirably high DC gain. As each switching device on the primary side is required to block the full input voltage (see, e.g., the LLC resonant converter shown in FIG. 1A), a higher input voltage results in an increased cost in high voltage components.

To achieve a wide output voltage range, the input voltage to the LLC resonant converter must be high enough to avoid an undesirably high DC gain. In this regard, a three-level topology, in which each switching device blocks only one-half of the input voltage, is a more attractive alternative than the conventional full-bridge topology of FIG. 1A, and a three-level topology is disclosed, for example, in the article "The three-level ZVS PWM converter-a new concept in high voltage DC-to-DC conversion" ("Pinheiro"), by J. R. Pinheiro and I. Barbi, published in the Proceedings of the 1992 International Conference on Industrial Electronics, Control, Instrumentation, and Automation, San Diego, CA, USA, 1992, pp. 173-178 vol.1. The three-level topology is described for LLC converters in the article "Three-level LLC series resonant DC/DC converter" ("Gu"), by Y. Gu, et al., published in IEEE Transactions on Power Electronics, vol. 20, no. 4, pp. 781-789, July 2005. Gu's LLC converters achieve zero-voltage switching (ZVS) for the switches without additional auxiliary circuit.

A three-level serial half bridge (SHB) topology, also known as stacked buck topology, is disclosed in the article "DC-DC converter: four switches $V_{pk} = V_{in}/2$, capacitive turn-off snubbing, ZV turn-on" ("Barbi"), by I. Barbi, et al. in IEEE Transactions on Power Electronics, vol. 19, no. 4, pp. 918-927, July 2004. Barbi removes the two clamping diodes in the conventional three-level topology of Pinheiro.

A half-input voltage, two-level modulation scheme for a DC/DC converter is disclosed in the article "Asymmetrical Duty Cycle-Controlled LLC Resonant Converter With Equivalent Switching Frequency Doubler" ("Zong"), by S. Zong, et al., published in IEEE Transactions on Power Electronics, vol. 31, no. 7, pp. 4963-4973, 7 2016. Zong halves the switching frequency of the primary switches to reduce the driving loss.

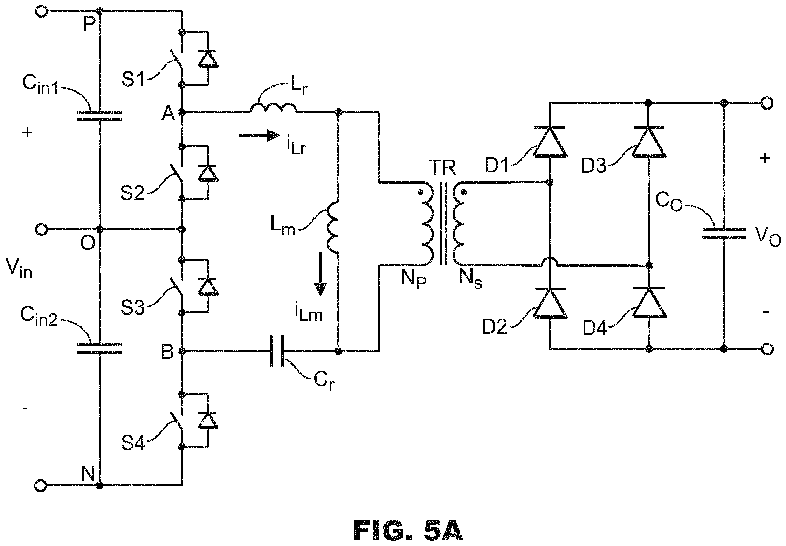

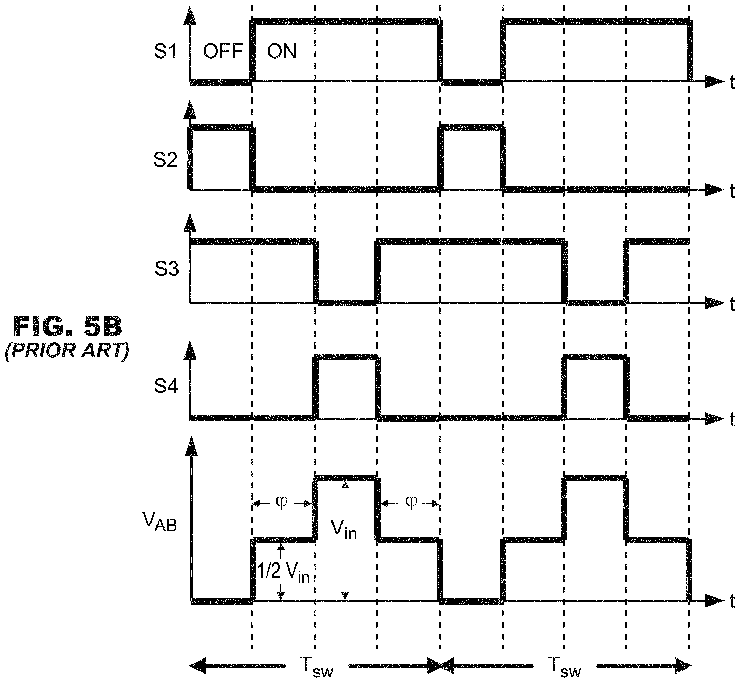

For applications with wide input voltage ranges, both full input voltage, two-level modulation and half input voltage, two-level modulation schemes are applied to SHB LLC converters in the articles: (a) "Wide input voltage range compensation in DC/DC resonant architectures for on-board traction power supplies," by A. Coccia, et al., published in 2007 European Conference on Power Electronics and Applications, 2007; (b) "Variable Frequency Multiplier Technique for High-Efficiency Conversion Over a Wide Operating Range," by W. Inam, et al., publi Electronics, vol. 4, no. 2, pp. 335-343, June 2016; and (c) "Research on Dual-Operation Mode of 3-level LLC resonant converter," by A.Z. Li, et al., published in 2015 9th International Conference on Power Electronics and ECCE Asia (ICPE-ECCE Asia), 2015. FIGs. 5A and 5B show, respectively, the circuit diagram and timing diagrams for the gate signals, demonstrating the two-level modulation schemes may also be effective approaches to regulate the output voltage.

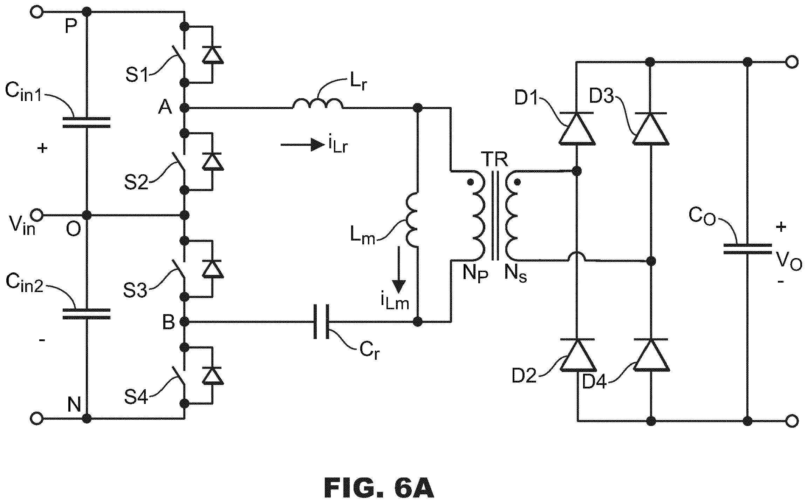

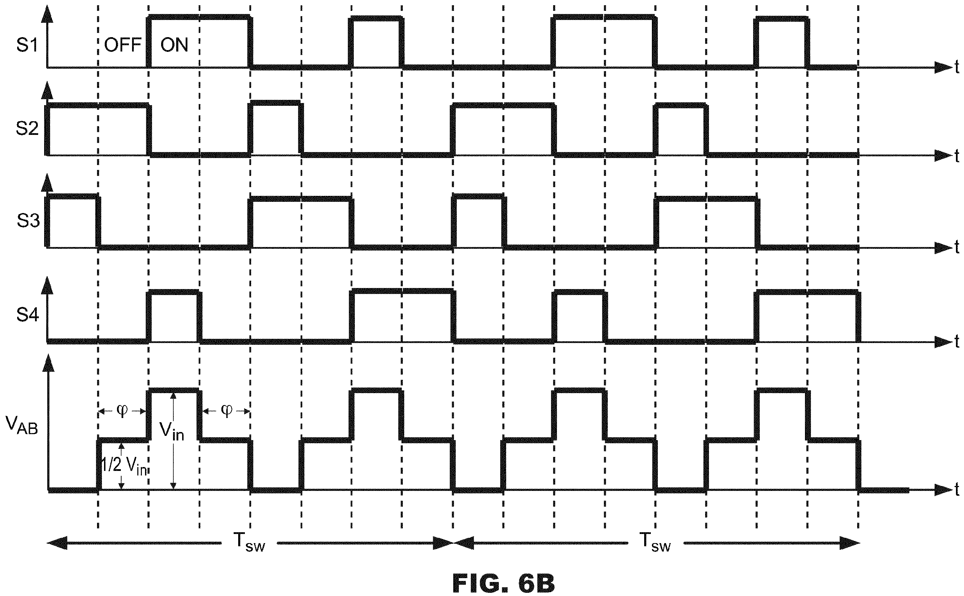

To achieve a wide output voltage range, the three-level modulation approach reduces the voltage gain once the maximum operating frequency has been reached. Under a three-level modulation scheme, however, the currents through the primary power switches are not balanced, which can cause thermal imbalance on the devices, shorten the device life and even lead to device damage. To balance the currents in the power switches, a periodically swapping modulation strategy is disclosed in the article "Periodically Swapping Modulation (PSM) Strategy for Three-Level (TL) DC/DC Converters With Balanced Switch Currents" ("Liu"), by D. Liu, et al., published in IEEE Transactions on Industrial Electronics, vol. 65, no. 1, pp. 412-423, January 2018. FIGs. 6A and 6B show, respectively, the circuit diagram and timing diagrams for the gate signals in Liu's DC/DC converters. However, Liu's gate signals of each half-bridge are not complementary, which increases the complexity of the gate driving circuit. In addition, the body diode of the MOSFETs conducts current due to the non-optimized gate signals, which increases conduction loss and reduces system efficiency.

Therefore, there is a need of providing an improved power converter in order to overcome the drawbacks of the conventional technologies.

SUMMARY OF THE INVENTION

It is an object of the present invention to provide an isolated DC/DC converter for wide output voltage range and a control method thereof so as to address the above-mentioned issues encountered by the prior arts.

This object is solved by the features of device claim 1. The dependent claims recite advantageous embodiments of the invention.

Accordingly, highly efficient methods of the embodiments of the present invention enable an SHB LLC resonant converter to regulate an output voltage over a wide range using a narrow device switching frequency range. A method of the embodiment of the present invention may use both modulation scheme control and device switching frequency control. During operation, the modulation scheme may be selected in response to one or more control signals provided from a controller or in an external command. The device switching frequency may be determined, for example, under a closed-loop control of a regulated output voltage. Based on the selected modulation scheme and the device switching frequency, the controller may generate the control signals that drive the primary-side switching devices of the SHB LLC resonant converter.

In one embodiment of the present invention, to achieve a regulated voltage in a high output-voltage range, the SHB LLC resonant converter operates under a symmetrical modulation scheme, with its device switching frequency being adjusted under closed-loop control. To achieve a regulated voltage in a low output-voltage range, the SHB LLC resonant converter operates under an asymmetrical modulation scheme, with device switching frequency control. Thus, the SHB LLC resonant converter operates under a narrower device switching frequency range with improved efficiency, while still achieving a very wide output-voltage range under different load conditions. In addition, the methods of the present invention have lesser restrictions on certain circuit parameters (e.g., the $L_m$ -to- $L_r$ ratio) while achieving desired minimum and maximum DC voltage gains. The methods of the present invention are applicable to resonant converters with different secondary-side topologies and secondary-side control schemes. The methods of the present invention operate under both fixed input-voltage and variable input-voltage conditions.

The present invention is better understood upon consideration of the following detailed description and accompanying figures.

BRIEF DESCRIPTION OF THE DRAWINGS

FIGs. 1A and 1B show, respectively, an exemplary conventional full-bridge LLC resonant converter under closed-loop voltage control, and its timing diagrams for switch control signals and primary-side full-bridge output voltage $V_{AB}$;

FIGs. 2A and 2B show, respectively, an exemplary conventional full-bridge LLC resonant converter with closed-loop voltage control, and its timing diagrams under phase-shift control for switch control signals and primary-side full-bridge output voltage $V_{AB}$;

FIGs. 3A and 3B show, respectively, an exemplary conventional full-bridge LLC resonant converter under topology-morphing control, and its timing diagrams for switch control signals during a full-bridge to half-bridge topology transition;

FIG. 4 shows an exemplary conventional full-bridge series-resonant converter under frequency and delay-time control;

FIGs. 5A and 5B show, respectively, an exemplary serial half-bridge LLC resonant converter and its timing diagrams under asymmetric three-level control for switch control signals S1 to S4 and primary-side output voltage VAB;

FIGs. 6A and 6B FIG. show, respectively, an exemplary serial half-bridge LLC resonant converter and its timing diagrams under periodically swapping three-level control for switch control signals S1 to S4 and primary-side output voltage VAB;

FIGs. 7A, 7B and 7C show, respectively, (i) exemplary serial half-bridge (SHB) LLC resonant converter 700 with a full-wave secondary-side diode rectifier, (ii) its timing diagrams under symmetrical modulation for switch control signals to switching devices $S_1$ to $S_4$ and phase leg output voltage $V_{AB}$, and (iii) its timing diagrams under asymmetrical modulation for switch control signals to switching devices $S_1$ to

$S_4$ and phase leg output voltage $V_{AB}$;

FIG. 8 is a schematic diagram showing SHB LLC resonant converter 800, which includes control circuit 801 that generates switch control signals for switching devices $S_1$ to $S_4$ based on output voltage $V_o$ (and, optionally, output current $I_o$), according to one embodiment of the present invention;

FIGs. 9A and 9B illustrate, respectively, switch control signals for switching devices $S_1$ to $S_4$ and phase-leg output voltage $V_{AB}$, as the control scheme switches (i) from a symmetrical modulation scheme to an asymmetrical modulation scheme, and (ii) from an asymmetrical modulation scheme to a symmetrical modulation scheme, according to one embodiment of the present invention;

FIGs. 10A and 10B show, respectively, serial half-bridge LLC resonant converter 1000 and its timing diagrams of (i) the control signals for primary switching devices S1 to S4, under a three-level modulation scheme, and (ii) primary-side output voltage $V_{AB}$, according to one embodiment of the invention;

FIG. 11 shows key waveforms of SHB LLC resonant converter 1000 of FIG. 10A during switching cycle Tsw; FIG. 11 indicates signal transitions at times $t_1$, $t_2, t_3, t_4, t_5, t_6, t_7, t_8, t_9, t_{10}, t_{11}, t_{12}, t_{13}, t_{14}, t_{15}$, and $t_{16}$;

FIGs. 12A-12P show sixteen operation stages of SHB LLC resonant converter 1000 under the 3-level modulation scheme of the embodiment of the present invention, corresponding to time periods ($t_0$, $t_1$), ($t_1, t_2$), ($t_2, t_3$), ($t_3, t_4$), ($t_4, t_5$), ($t_5, t_6$), ($t_6, t_7$), ($t_7, t_8$), ($t_8, t_9$), ($t_9, t_{10}$), ($t_{10}, t_{11}$), ($t_{11}, t_{12}$), ($t_{12}, t_{13}$), ($t_{13}, t_{14}$), ($t_{14}, t_{15}$), and ($t_{15}, t_{16}$), respectively;

FIG. 13 shows control switch voltages $S_1$ to $S_4$ in primary switching devices $S_1$ to $S_4$, and the contemporaneous currents $I_1$ to $I_4$ flowing through them during switching period $T_{SW}$, under the three-level modulation scheme of the embodiment of the present invention, without accounting for the effects of any dead-time;

FIG. 14 is a schematic diagram showing SHB LLC resonant converter 1400, which includes control circuit 1401 that generates switch control signals to primary switching devices $S_1$ to $S_4$ based on output voltage $V_O$ (and, optionally, output current $I_O$), according to one embodiment of the present invention;

FIG. 15A illustrates control signals for primary switching devices $S_1$ to $S_4$ and phase-leg output voltage $V_{AB}$, as the control scheme switches from a symmetrical modulation scheme to a three-level modulation scheme;

FIG. 15B illustrates control signals for primary switching devices $S_1$ to $S_4$ and phase-leg output voltage $V_{AB}$, as the control scheme switches from a three-level modulation scheme to a symmetrical modulation scheme, according to one embodiment of the present invention;

FIGs. 16A and 16B show, respectively, (i) SHB LLC resonant converter 1600 with a full-bridge synchronous rectifier on the secondary side, and (ii) SHB LLC resonant converter 1650 with center-tapped transformer TR and synchronous rectifiers $S_5$ and $S_6$ on the secondary side, according to one embodiment of the present invention; and

FIGs. 17A, and 17B show, respectively, (i) SHB LLC resonant converter 1700 with variable DC input voltage source 1702, and (i) SHB LLC resonant converter 1750 with DC input voltages $V_{in1}$ and $V_{in2}$, respectively, controlled according to one embodiment of the present invention.

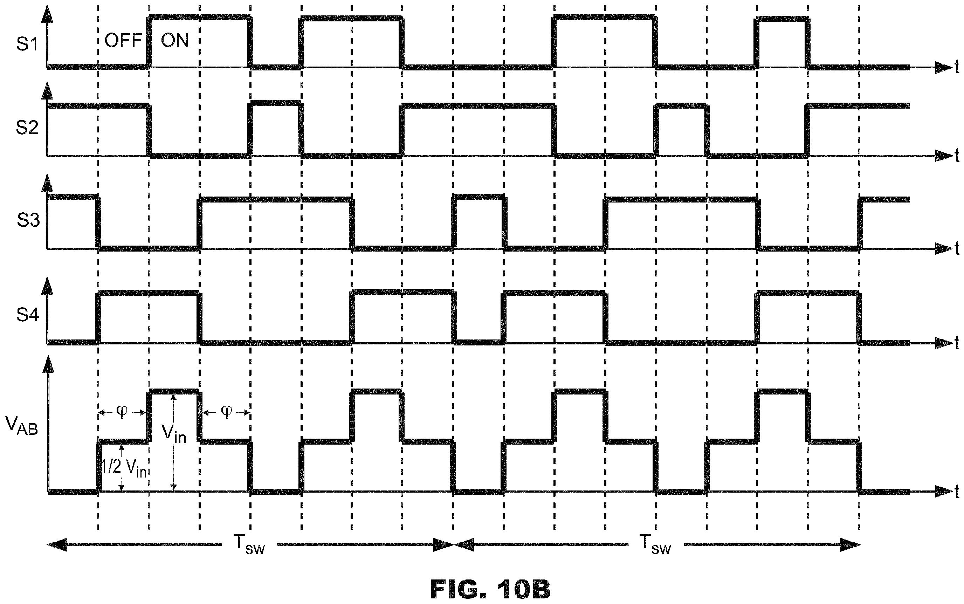

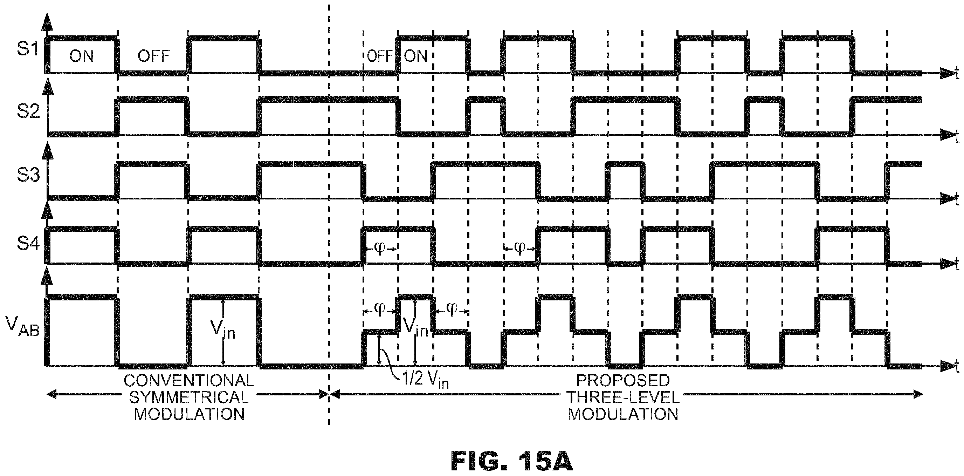

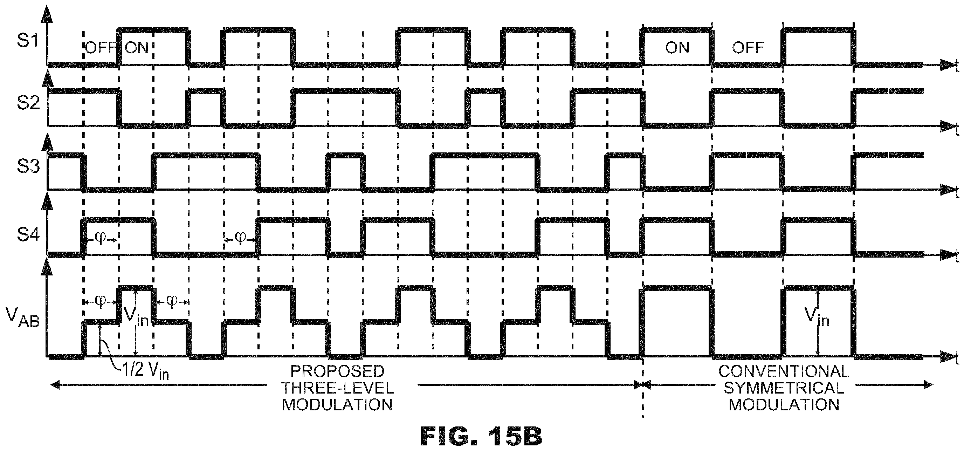

In summary, the subject-matter of claim 1 is reflected by figures 10B, 15A and 15B. The other figures serve to explain various details of the converter topology, the transitions between the symmetrical and asymmetrical modulation schemes and the selection of the duty cycles, as defined by the dependent claims 2-14.

DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

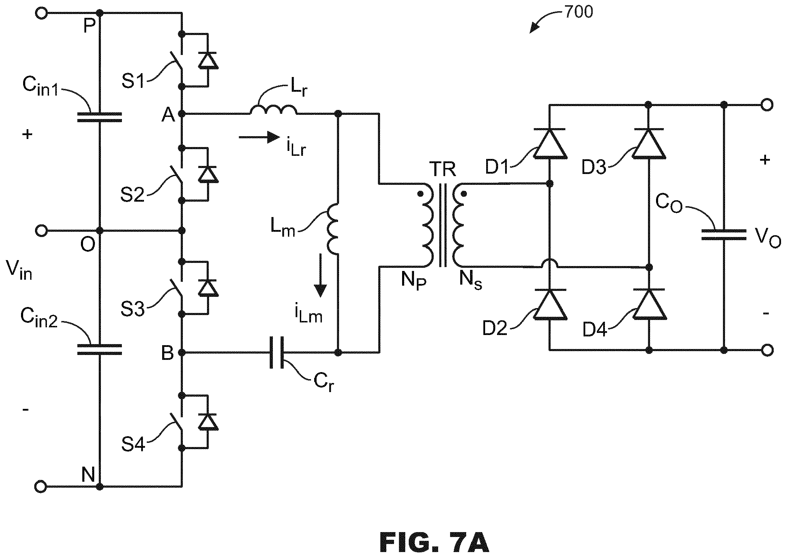

To avoid the higher cost associated with a higher input voltage, a multi-level topology may be used to maintain the same device voltage rating for the primary-side bridge. FIG. 7A shows a 3-level SHB topology (also known as "stacked buck topology") that provides LLC resonant converter 700 that has a serial half-bridge on the primary-side. As shown in FIG. 7A, the serial half-bridge includes four series-connected switching devices $S_1$ to $S_4$, configured such that each switching device $S_1$ to $S_4$ blocks one-half of the input voltage across input terminals P and N. The input terminals P and N are provided across series-connected input capacitors $C_{in1}$ and $C_{in2}$, and across the switching devices $S_1$ and $S_4$. The common terminal of the input capacitors $C_{in1}$ and $C_{in2}$ is also the common terminal between the switching devices $S_2$ and $S_3$, such that the input capacitor $C_{in1}$ is connected in parallel with the switching devices $S_1$ and $S_2$, and the input capacitor $C_{in2}$ is connected in parallel with the switching devices $S_3$ and $S_4$. A full-wave diode rectifier

$D_1$ to $D_4$ is provided on the secondary side. A filter capacitor $C_o$ is provided on the secondary side and configured to provide the output voltage $V_o$ or output current $I_o$ to the load.

A first phase-leg output terminal A is provided at the common terminal between the switching devices $S_1$ and $S_2$, while a second phase-leg output terminal B is provided at the common terminal between the switching devices $S_3$ and $S_4$. Connected across the terminals A and B is a resonant circuit formed by isolation transformer TR and series-connected resonant inductor $L_r$, resonant capacitor $C_r$, and transformer magnetizing inductor $L_m$. The primary-side winding of the isolation transformer TR is connected in parallel with the magnetizing inductor $L_m$. The secondary-side winding of the isolation transformer TR may be either (i) a center-tapped winding with two rectification components, or (ii) a single winding with a full-bridge rectifier. Each of the switching devices $S_1$ to $S_4$ blocks its share of the input voltage in one direction, but each conducts a current in both directions. Each of the switching devices $S_1$ to $S_4$ may be implemented by a semiconductor switch (e.g., MOSFET, IGBT, BJT or another semiconductor switch). Alternately, instead of a diode rectifier circuit, the secondary-side may be implemented by a synchronous rectifier, which reduces conduction loss.

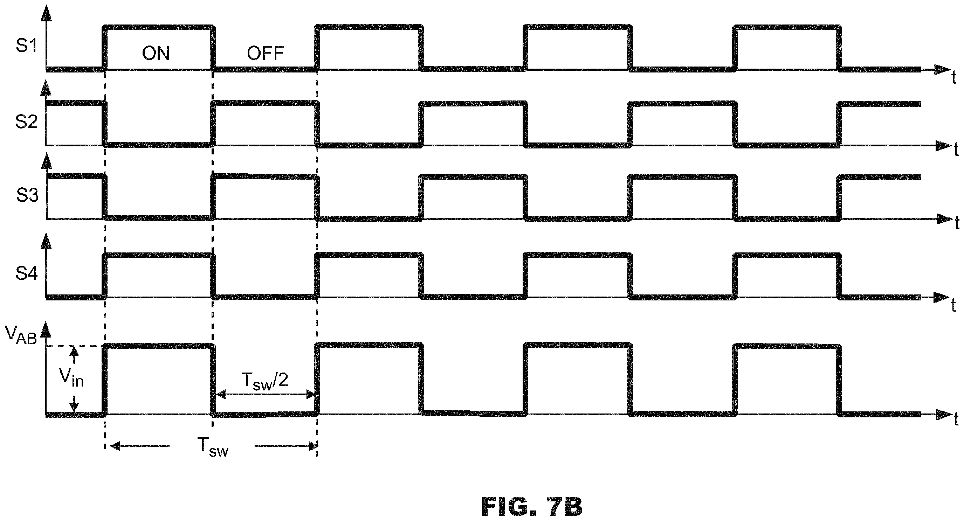

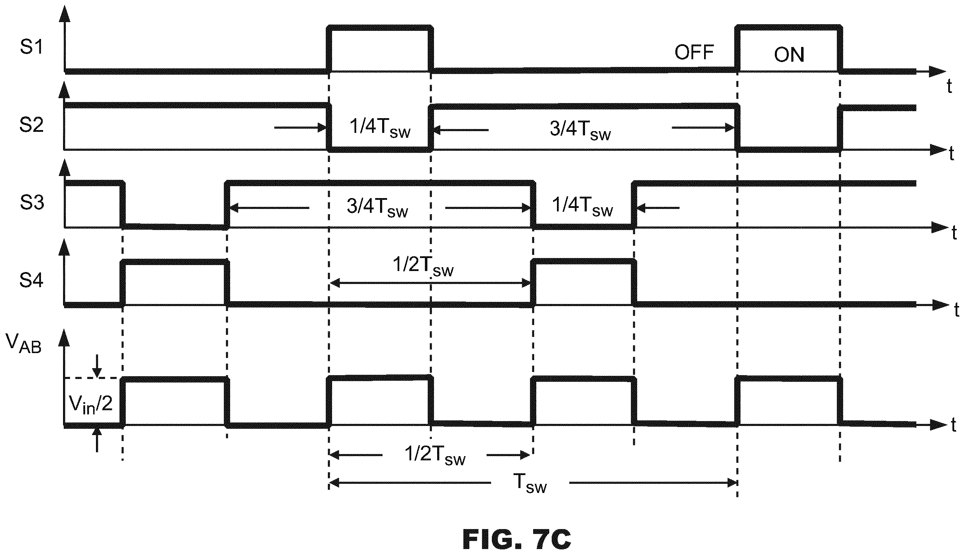

FIGs. 7B and 7C illustrate, respectively, "symmetrical" and "asymmetrical" modulation schemes for the SHB LLC resonant converter 700 of FIG. 7A. Each modulation scheme controls the switch control signals to operate the switching devices $S_1$ to $S_4$. In either modulation scheme, the signals that operate the switching devices $S_1$ and $S_2$ are complementary, and the signals for operating the switching devices $S_3$ and $S_4$ are also complementary. In practice, a small dead-time is inserted between each pair of complementary switch control signals to avoid a phase-leg shoot-through. FIG. 7B shows, under symmetrical modulation, the timing diagrams of the switch control signals for the switching devices $S_1$ to $S_4$ and phase-leg output voltage $V_{AB}$. The switch control signals operating the switching devices $S_1$ and $S_4$ are in-phase signals having the same 50% duty cycle waveform. Likewise, the switch control signals operating the switching devices $S_2$ and $S_3$ are also in-phase signals having the same 50% duty cycle waveform, except that the switch control signals operating the switching devices $S_1$ and $S_4$ are complementary to the switch control signals operating the switching devices $S_2$ and $S_3$. Consequently, the phase leg output voltage $V_{AB}$ (i.e., bridge output voltage) switches between $V_{in}$ and 0 with a 50% duty cycle at the device switching frequency.

FIG. 7C shows, under asymmetrical modulation, the timing diagrams of the switch control signals to the switching devices $S_1$ to $S_4$ and phase-leg output voltage $V_{AB}$. As shown in FIG. 7C, the switch control signals that operate the switching devices $S_1$ and $S_4$ are 25% duty cycle signals that are phase-shifted 180° of each other, while the switch control signals that operate the switching devices $S_2$ and $S_3$ are 75% duty cycle signals that are also phase-shifted 180° of each other. With this asymmetrical modulation, the voltage across the input capacitor $C_{in1}$ is provided as the phase-leg output voltage $V_{AB}$ when the switching devices $S_1$ and $S_3$ are closed, the voltage across the input capacitor $C_{in1}$ is provided as the phase-leg output voltage $V_{AB}$ when the switching devices $S_2$ and $S_4$ are closed, and the phase-leg output voltage $V_{AB}$ is zero volts when the switching devices $S_2$ and $S_3$ are closed. Thus, the phase-leg output voltage $V_{AB}$ switches between $0.5V_{in}$ and 0 volts at 50% duty cycle at twice device switching frequency $f_{sw}$. In either modulation scheme, device switching frequency $f_{sw}$ may be a control variable that helps achieve different control targets.

Symmetrical and asymmetrical modulation schemes of FIGs. 7B and 7C each generates a different phase-leg output voltage $V_{AB}$ across the series-connected $L_r$-$C_r$-$L_m$ resonant circuit; the phase-leg output voltage $V_{AB}$ includes different DC and AC components. During the LLC resonant converter 700 operations, the resonant capacitor $C_r$ blocks the DC component, so that only the AC component appears across the primary-side windings of the isolation transformer TR. When device switching frequency $f_{sw}$ equals the resonant frequency

$$f_r = \frac{\sqrt{L_r C_r}}{2\pi},$$

the output voltage $V_O$ equals the average of the product of the rectified AC component of the phase leg output voltage $V_{AB}$ and a transformer voltage gain. As the transformer voltage gain is the turns ratio

$$\frac{N_S}{N_P},$$

where $N_S$ and $N_P$ are the numbers of turns in the secondary-side winding and the primary-side winding, respectively, the output voltage $V_O$ is given by:

$$V_O = \frac{N_P \overline{V_{AB\_ac}}}{N_S},$$

where $\overline{V_{AB\_ac}}$ is the average of the rectified AC component of the phase-leg output voltage $V_{AB}$.

For the symmetrical modulation, the AC component of the phase-leg output voltage $V_{AB}$ is a 50% duty cycle bipolar square-wave with amplitude

$$\frac{V_{in}}{2}$$

at the device switching frequency $f_{sw}$, such that the DC voltage gain at the resonant frequency $f_r$ is

$$\frac{Ns}{2Np}.$$

For the asymmetrical modulation, the AC component of the phase-leg output voltage $V_{AB}$ is a 50% duty cycle bipolar square-wave with amplitude

$$\frac{V_{in}}{4}$$

at twice the device switching frequency $f_{sw}$, such that the DC voltage gain at the resonant frequency $f_r$ is

$$\frac{Ns}{4Np}.$$

Thus, the DC voltage gain at the resonant frequency $f_r$ under symmetrical modulation is twice the DC voltage gain at the resonant frequency $f_r$ under asymmetrical modulation, and the voltage gain for the LLC resonant converter 700 may be adjusted by switching frequency control.

As mentioned above, maximum efficiency is achieved when the LLC resonant converter 700 is operated at the operating point at or very close to the resonant frequency $f_r$. To achieve a wide output voltage range, conventional control changes the device switching frequency $f_{sw}$ to adjust the DC voltage gain. However, switching frequency control moves the operating point away from maximum circuit efficiency. Further, for a very wide output voltage range, even such a control may still be unable to achieve the required DC voltage gain because the fixed circuit parameters.

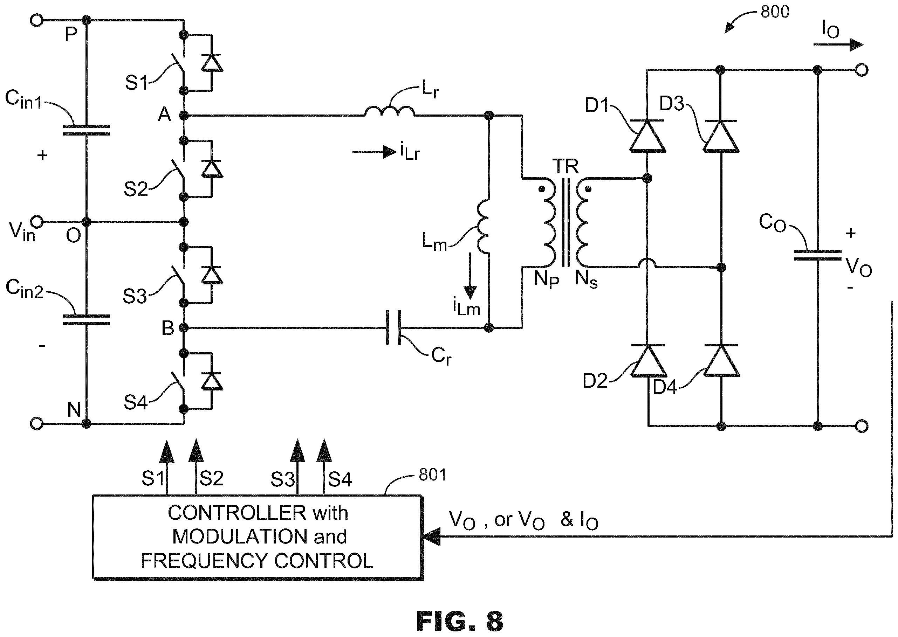

The inventors of the present invention recognize that a SHB LLC resonant converter can provide a very wide output voltage range, while efficiently achieving desirable different DC voltage gains at or near the resonant frequency (i.e., a narrower input switching frequency range), using a combination of different modulation schemes. Moreover, the control method of the embodiment of the present invention achieves the wide output voltage range and the circuit gains even though the circuit parameter values are fixed. FIG. 8 is a schematic diagram showing SHB LLC resonant converter 800, which includes a control circuit 801 that generates switch control signals to switching devices $S_1$ to $S_4$ based on output voltage $V_o$ (and, optionally, output current $I_o$), according to one embodiment of the present invention.

In SHB LLC resonant converter 800, the control circuit 801 may use the output voltage $V_O$ as its main control target. Output current $I_O$ may also be used as either a separate control target or as a feedback signal representative of a load condition. A reference value representative of each control target may be generated internally in the control circuit 801 or from an external source. In an embodiment, the selected modulation scheme may be selected by the control circuit under direction of an external management controller. Based on a difference between the sensed voltage $V_o$ (or the sensed current $I_o$) and the corresponding reference value, the control circuit 801 switches among two or more modulation schemes that operate the switching devices $S_1$ to $S_4$ on the primary-side phase leg of SHB LLC resonant converter 800. One or more of the control targets may be used to determine values of other control parameters, such as device switching frequency $f_{sw}$ and a phase-shift in the selected modulation scheme. The switch control signals that operate the switching devices $S_1$ to $S_4$ on the primary side are generated based on the selected modulation scheme and other control parameter values.

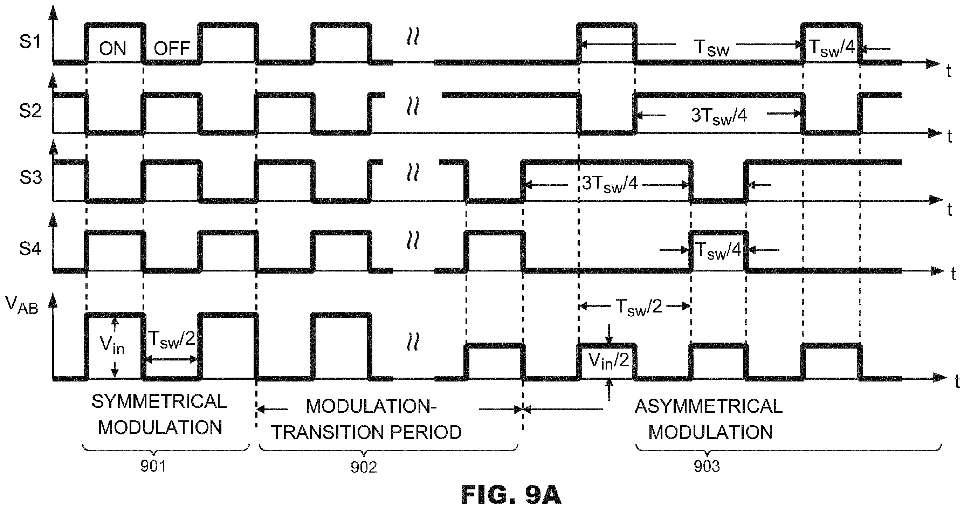

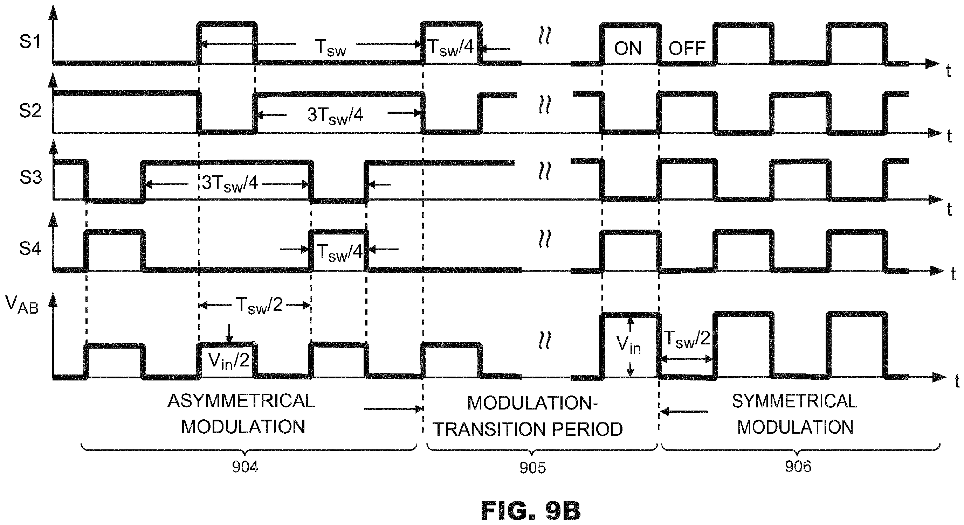

In FIGs. 9A and 9B, the transformer turns ratio $\frac{Ns}{Np}$ of the isolation transformer TR, which is merely a scale factor in this instance, is set to 1, to simplify this detailed description. As illustrated in FIGs. 7B and 7C, the symmetrical modulation scheme provides twice the output voltage Vo as the asymmetrical modulation scheme at the device switching frequency $f_{sw}$ at or about the resonant frequency $f_r$. Specifically, under symmetrical modulation, the phase-leg output voltage $V_{AB}$ (and, hence, output voltage $V_o$ also) at the resonant frequency $f_r$ is $0.5V_{in}$. In one embodiment, the resonant parameters of the isolation transformer TR are such that, when the device switching frequency $f_{sw}$ varies from $0.5f_r$ to $1.4f_r$, the output voltage $V_o$ varies from $0.3V_{in}$ to $0.8V_{in}$. Likewise, under asymmetrical modulation, the phase-leg output voltage $V_{AB}$ (and, hence, output voltage $V_o$ also) at the resonant frequency $f_r$ is $0.25V_{in}$. In the same embodiment, the resonant parameters of the isolation transformer TR are such that, when the device switching frequency $f_{sw}$ varies from $0.25f_r$ to $0.8f_r$, the output voltage $V_o$ varies from $0.125V_{in}$ to $0.4V_{in}$. (Recall that the device switching frequency $f_{sw}$ is only half the frequency of the phase-leg output voltage $V_{AB}$.) Accordingly, the present invention further provides a control method that combines a selection of a modulation scheme and frequency control to achieve a predetermined output voltage range. (The modulation schemes may overlap in their respective output voltage regulation ranges.) Modulation scheme selection under the embodiment of the present invention may be based, for example, on control parameters such as voltage control target, load condition, and allowable operating frequency range. When one or more of the conditions change such that a modulation scheme different from the current scheme is preferred, the control circuit 801 effectuates a transition from the current modulation scheme to the preferred modulation scheme.

In the embodiment described above, SHB LLC resonant converter 800 may have an output voltage range $V_o$ between $0.125V_{in}$ and $0.8V_{in}$, with the device switching frequency $f_{sw}$ ranged between $0.25f_r$ to $1.6f_r$. The maximum-to-minimum DC gain ratio is 6.4, and the maximum device switching frequency $f_{sw}$ is only $1.6f_r$. For a low output voltage, the device switching frequency $f_{sw}$ is not required to increase significantly, as in the case of conventional frequency control, thereby significantly switching loss. (In fact, the device switching frequency $f_{sw}$ is even reduced when the frequency-doubling asymmetrical modulation scheme is used for the low output voltage.) The maximum device switching frequency $f_{sw}$ is largely reduced under a method of the embodiment of the present invention especially at very low output voltage, at very light load condition or both. By adjusting circuit parameter values, an even higher maximum-to-minimum DC gain ratio can be achieved, over the same narrow device switching frequency range, which is not achieved in SHB LLC resonant converters using conventional control.

FIGs. 9A and 9B illustrate, respectively, switch control signals for the switching devices $S_1$ and $S_4$ and phase-leg output voltage $V_{AB}$, as the control scheme switches (i) from a symmetrical modulation scheme to an asymmetrical modulation scheme, and (ii) from an asymmetrical modulation scheme to a symmetrical modulation scheme, according to one embodiment of the present invention. FIG. 9A illustrates a transition from a symmetrical modulation scheme (interval 901) to an asymmetrical modulation scheme (interval 903) when the output voltage control target changes from a high voltage to a low voltage in the output voltage range. Transition period 902 between the modulation schemes can be implemented in different ways, such as frequency shift, phase shift, duty cycle shift, or any of their combinations. Likewise, FIG 9 B illustrates a transition from an asymmetrical modulation scheme (interval 904) to a symmetrical modulation scheme (interval 906) when the output voltage control target changes from a low voltage to a high voltage in the output voltage range. Transition period 905 between the modulation schemes can be implemented in the way as in the transition of FIG. 9A, i.e., using control parameters such as frequency shift, phase shift, duty cycle shift, or any of their combinations, but in reverse order. Of course, any other suitable transition control methods may also be used.

Three-level modulation

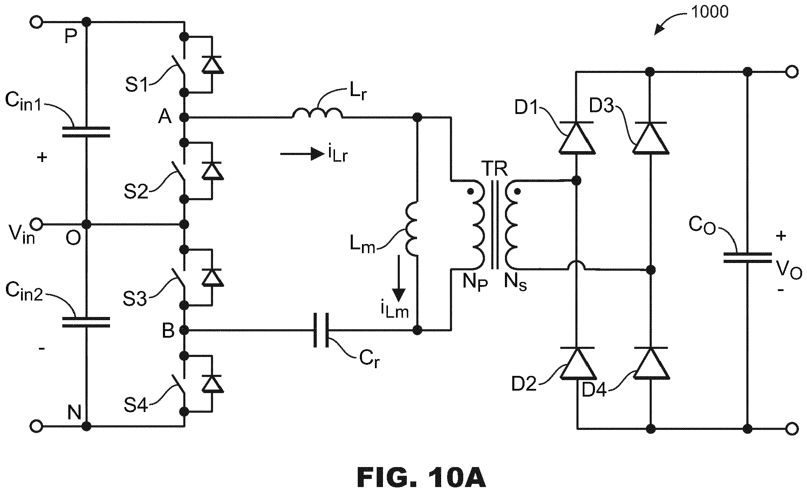

According to one embodiment of the present invention, FIG. 10B illustrates a three-level modulation scheme for the signals operating primary switching devices $S_1$, $S_2$, $S_3$ and $S_4$ of SHB LLC resonant converter 1000 of FIG. 10A. The signals that operate the switching devices $S_1$ and $S_2$ are complementary, and the signals for operating the switching devices $S_3$ and $S_4$ are also complementary. In practice, a small dead-time is inserted between each pair of complementary switch signals to avoid a phase-leg shoot-through. In this embodiment, based on the output voltage or the output current, the control circuit is configurable to generate the first, second, third, and fourth switch control signals $S_1$ to $S_4$ according to a first modulation scheme in which (i) the first and the second switch control signals $S_1$, $S_2$ are substantially complementary with each other and the third and the fourth switch control signals $S_3$, $S_4$ are substantially complementary with each other, (ii) the first, second, third, and fourth switch control signals $S_1$, $S_2$, $S_3$, $S_4$ are periodic with a common switching period $T_{sw}$, (iii) within the common switching period $T_{sw}$, (1) each switch control signal has two rising edges and two falling edges; and (2) the first rising edge of the first switch control signal $S_1$ lags the first rising edge of the fourth switch control signal $S_4$ by a first predetermined time, while the second rising edge of the first switch control signal $S_1$ leads the second rising edge for the fourth switch control signal $S_4$ by a second predetermined time, and (iv) the control circuit varies the switching period, the first predetermined time, and the second predetermined time. In an embodiment, the control circuit varies the switching period about substantially one cycle of a resonant frequency of the LC resonant circuit.

FIG. 10B shows the timing diagrams of the signals to primary switching devices $S_1$ to $S_4$ and SHB phase-leg output voltage $V_{AB}$. In switching period $T_{sw}$, each of primary switching devices $S_1$, $S_2$, $S_3$ and $S_4$ is turned on twice and turned off twice. Each time it is turned on, primary switching device $S_1$ or $S_4$ has a fixed "on" duration that spans 25% of switching period $T_{sw}$, such that the accumulated "on" duration is 50% of switching period $T_{sw}$. As shown in FIG. 10B, during switching period $T_{sw}$, the first rising edge for primary switching device $S_1$ lags the first of rising edge for primary switching device $S_4$, while the second rising edge for primary switching device $S_1$ leads the second rising edge for primary switching device $S_4$. The lead and lag times are each $\varphi$, as shown in FIG. 10B. In addition, the first rising edge for primary switching device $S_1$ leads the second rising edge for primary switching device $S_4$ by $\frac{1}{2} T_{sw}$. Operating primary switching devices $S_1$, $S_2$, $S_3$, and $S_4$ in this manner, phase-leg output voltage $V_{AB}$ has three different voltage levels. In this embodiment, (i) when the first and fourth switching devices $S_1$, $S_4$ are both non-conducting, the voltage across the first and second electrical nodes goes to a first voltage level, (ii) when one of the first and fourth switching devices $S_1$, $S_4$ is conducting, the voltage across the first and second electrical nodes goes to a second voltage level, and (iii) when the first and fourth switching devices $S_1$, $S_4$ are both conducting, the voltage across the first electrical node goes to a third voltage level. The first voltage level may be ground, the second voltage level may be substantially one-half the input signal, and the second voltage level may be substantially the input signal. When primary switching devices $S_1$ and $S_4$ are both "on" or conducting, phase-leg output voltage $V_{AB}$ equals $V_{in}$. When primary switching devices $S_2$ and $S_4$ are both "on," or when primary switching devices $S_1$ and $S_3$ are both "on," phase-leg output voltage $V_{AB}$ equals $0.5V_{in}$. When primary switching devices $S_2$ and $S_3$ are both "on", phase-leg output voltage $V_{AB}$ equals zero volts.

Thus, the waveform of phase-leg output voltage $V_{AB}$ is periodical with a period that is half switching period $T_{sw}$. As duration φ corresponds to the duration when primary switching devices $S_2$ and $S_4$ are both "on," or when primary switching devices $S_1$ and $S_3$ are both "on," duration φ determines the duration over which phase-leg output voltage $V_{AB}$ equals ½ $V_{in}$. Switching frequency $f_{sw}$ (hence, switching period $T_{sw}$) and duration φ are the control variables for setting different control targets.

Key waveforms and stages analysis

In this detailed description, to simplify the analysis of the operations, ripple voltages of input capacitor $C_{in}$ and output capacitor $C_O$, as shown in FIG. 10A, are assumed negligible and thus may be represented by constant-voltage source $V_{in}$ and $V_O$. Also, the semiconductor circuit elements herein are each assumed to have zero resistance in its "on" or conducting state (i.e., they are considered short circuits). However, the output capacitances of the primary switching devices are not neglected.

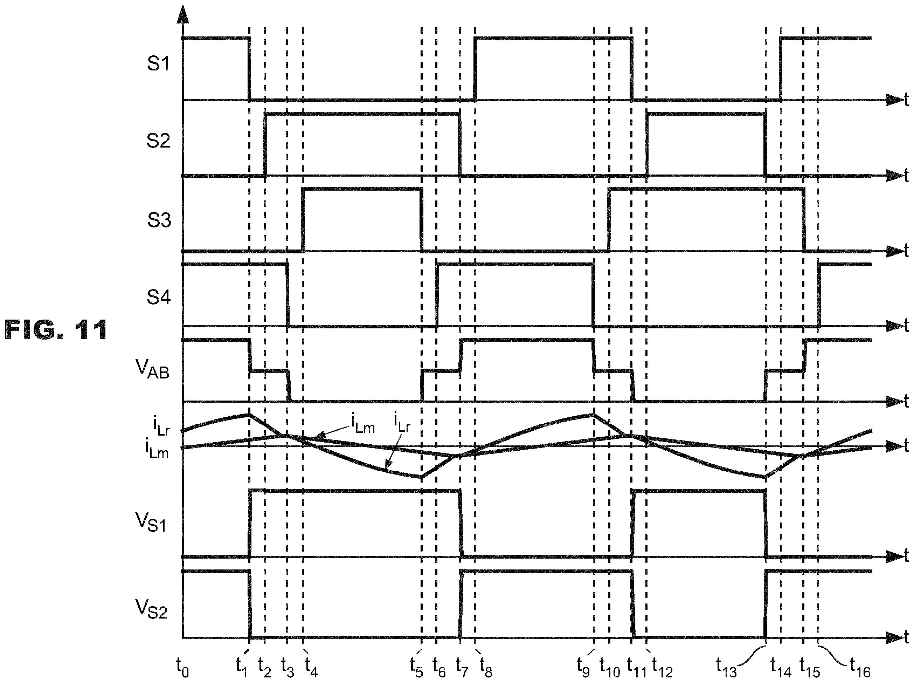

FIG. 11 shows key waveforms of SHB LLC resonant converter 1000 of FIG. 10A during switching cycle $T_{sw}$. FIG. 11 shows switch control voltages $S_1$, $S_2$, $S_3$ and $S_4$ (i.e., positive voltages indicate primary switching devices $S_1$ to $S_4$, respectively, to be in the "on" state), primary-side output voltage $V_{AB}$, current $i_{Lr}$ in resonant inductor $L_r$, current $i_{Lm}$ in magnetizing inductor $L_m$, and voltages $V_{S1}$ and $V_{S2}$ across primary switching devices $S_1$ and $S_2$. FIG. 11 indicates signal transitions at times $t_1$, $t_2$, $t_3$, $t_4$, $t_5$, $t_6$, $t_7$, $t_8$, $t_9$, $t_{10}$, $t_{11}$, $t_{12}$, $t_{13}$, $t_{14}$, $t_{15}$, and $t_{16}$.

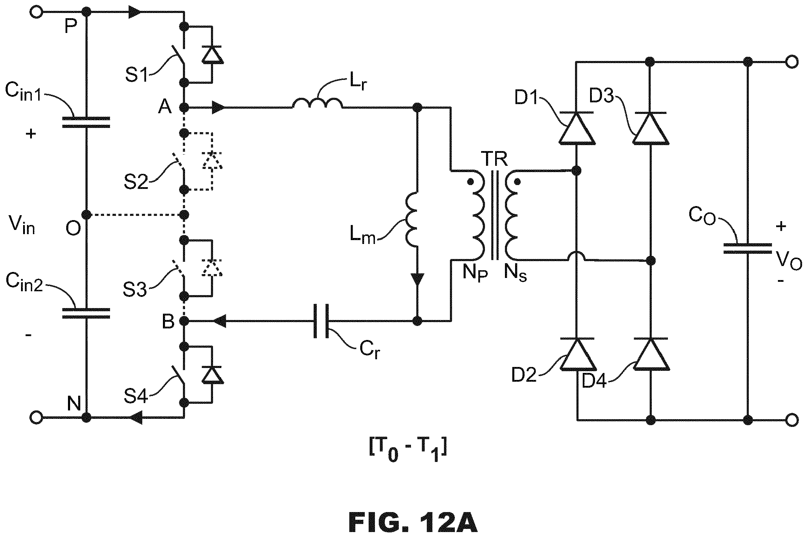

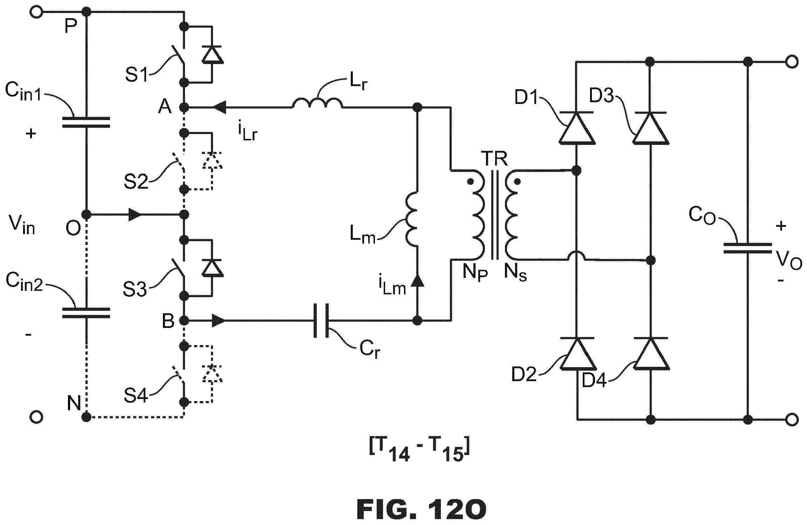

In conjunction with FIG. 11, FIGs. 12A-12P show sixteen operation stages of SHB LLC resonant converter 1000 under the 3-level modulation scheme of the embodiment of the present invention, corresponding to time periods $(t_0, t_1)$, $(t_1, t_2)$, $(t_2, t_3)$, $(t_3, t_4)$, $(t_4, t_5)$, $(t_5, t_6)$, $(t_6, t_7)$, $(t_7, tg)$, $(tg, t_9)$, $(t_9, t_{10})$, $(t_{10}, t_{11})$, $(t_{11}, t_{12})$, $(t_{12}, t_{13})$, $(t_{13}, t_{14})$, $(t_{14}, t_{15})$, and $(t_{15}, t_{16})$, respectively. In FIGs. 12A-12P, an open or "off" switching device is indicated by dash-lines (e.g., in FIG. 12A, primary switching devices $S_2$ and $S_3$ are open). Also, parasitic capacitors of primary switching devices $S_1$, $S_2$, $S_3$ and $S_4$ are represented by capacitors $C_{S1}$, $C_{S2}$, $C_{S3}$ and $C_{S4}$, respectively.

During time period $(t_0, t_1)$, as shown in FIG. 12A, resonant current $i_{Lr}$ increases and flows in resonant in-

ductor $L_r$, transformer TR, magnetizing inductor $L_m$, resonant capacitor $C_r$, and primary switching devices $S_1$ and $S_4$. Phase-leg output voltage $V_{AB}$ equals input voltage $V_{in}$.

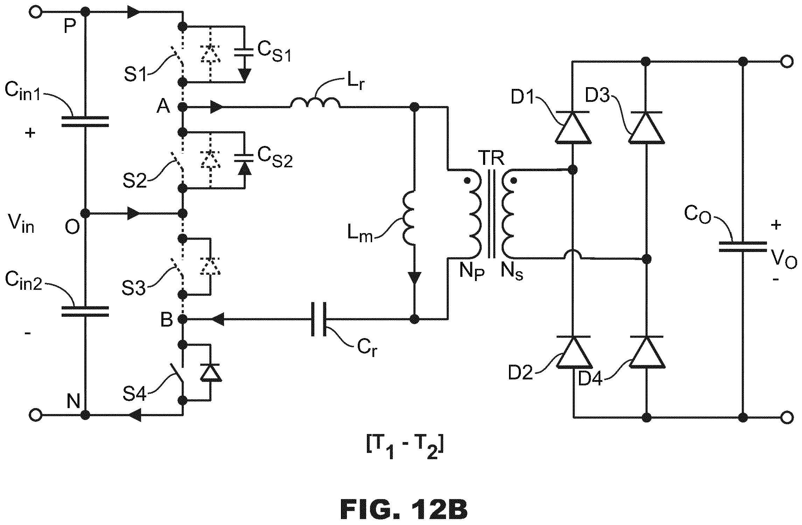

During time period $(t_1, t_2)$, as shown in FIG. 12B, capacitor $C_{S1}$ charges to ½ $V_{in}$ and capacitor $C_{S2}$ completely discharges (i.e., to zero volts across), after primary switching device $S_1$ becomes open. Current $i_{Lr}$ begins to decrease. Phase-leg output voltage $V_{AB}$ falls to ½ $V_{in}$, as a result of the charging and discharging in capacitors $C_{S1}$ and $C_{S2}$.

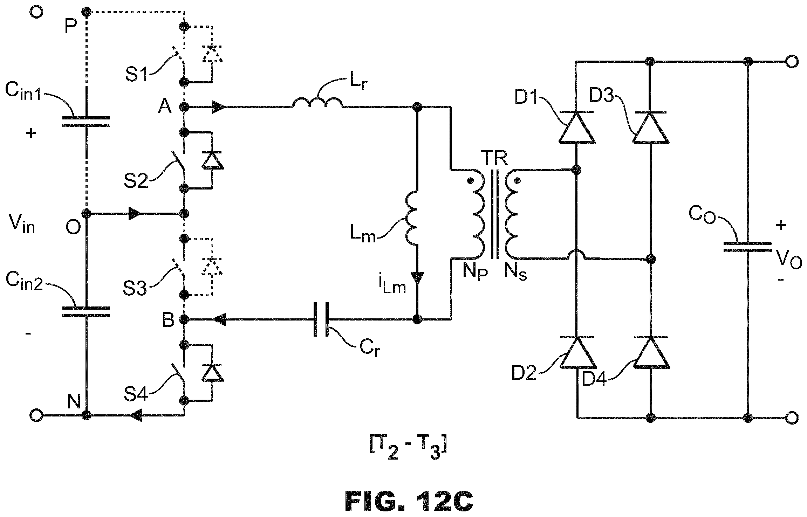

During time period $(t_2, t_3)$, as shown in FIG. 12C, primary switching device $S_2$ turns on at zero volts (i.e., at "ZVS" condition, with no switching loss). Phase-leg output voltage $V_{AB}$ remains at ½$V_{in}$ and current $i_{Lr}$ continues to decrease.

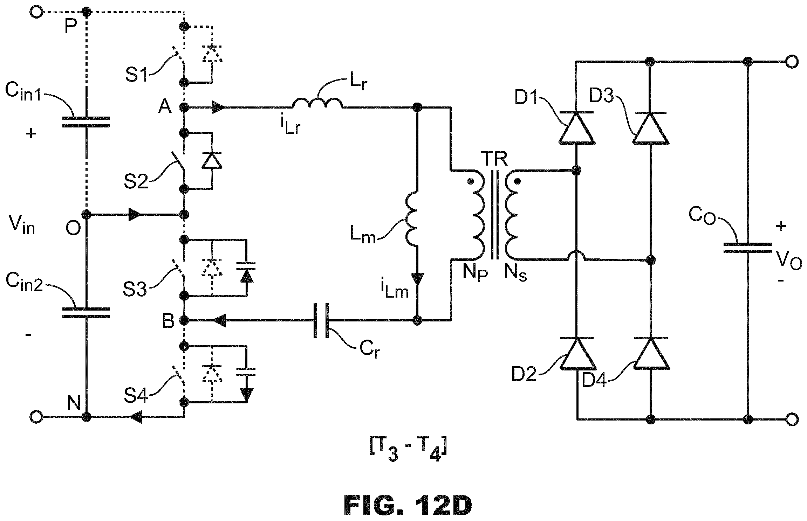

During time period $(t_3, t_4)$, as shown in FIG. 12D, capacitor $C_{S4}$ charges to ½$V_{in}$ and capacitor $C_{S3}$ discharges completely, after primary switching device $S_4$ is turned off. Phase-leg output voltage $V_{AB}$ goes to zero volts, as a result of the charging and discharging in capacitors $C_{S4}$ and $C_{S3}$. Current $i_{Lr}$ continues to decrease.

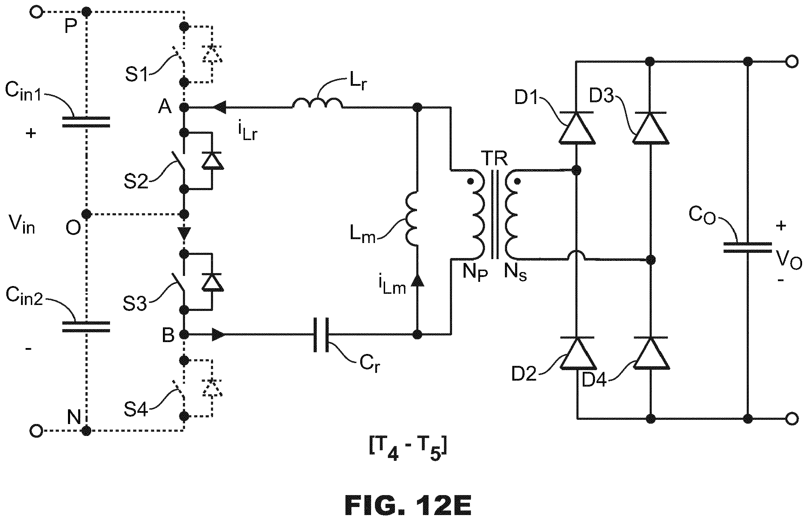

During time period $(t_4, t_5)$, as shown in FIG. 12E, primary switching device $S_3$ turns on at ZVS condition. Phase-leg output voltage $V_{AB}$ remains at zero volts and current $i_{Lr}$ continues to decrease.

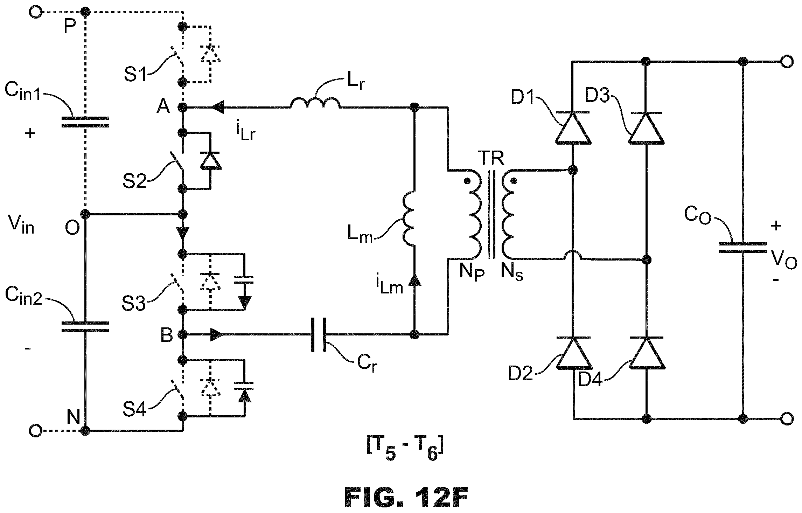

During time period $(t_5, t_6)$, as shown in FIG. 12F, capacitor $C_{S3}$ charges to ½ $V_{in}$ and capacitor $C_{S4}$ discharges completely, after primary switching device $S_3$ is turned off. Phase-leg output voltage $V_{AB}$ rises to ½ $V_{in}$ and current $i_{Lr}$ begins to increase, as a result of the charging and discharging in capacitors $C_{S3}$ and $C_{S4}$.

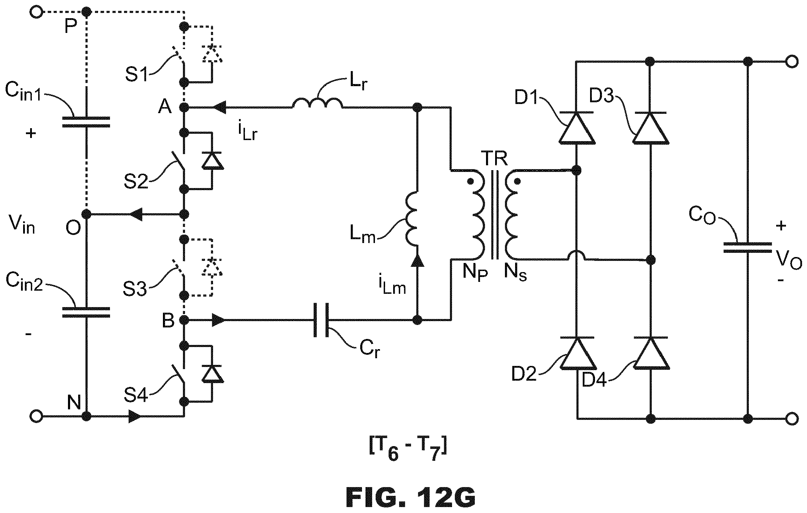

During time period $(t_6, t_7)$, as shown in FIG. 12G, primary switching device $S_4$ turns on at ZVS condition. Phase-leg output voltage $V_{AB}$ remains at ½$V_{in}$ and current $i_{Lr}$ continues to increase.

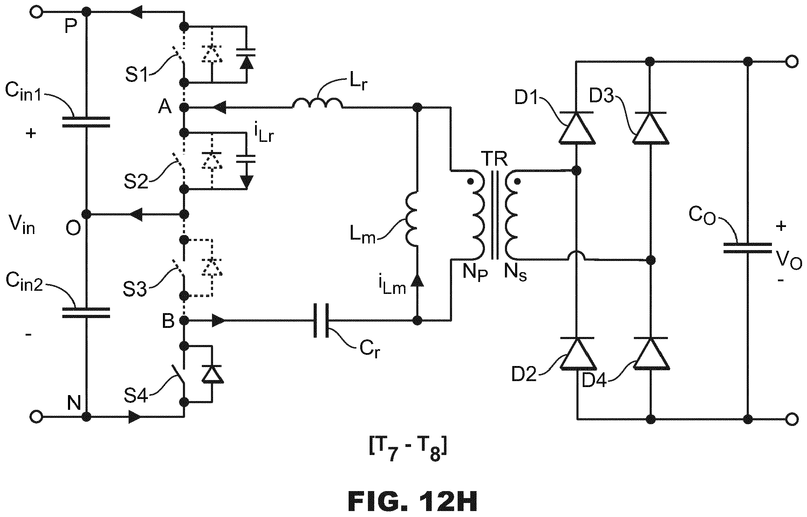

During time period $(t_7, t_8)$, as shown in FIG. 12H, capacitor $C_{S2}$ charges to ½ $V_{in}$ and capacitor $C_{S1}$ discharges completely, after primary switching device $S_2$ is turned off. Phase-leg output voltage $V_{AB}$ becomes $V_{in}$, as a result of the charging and discharging in capacitors $C_{S2}$ and $C_{S1}$. Current $i_{Lr}$ continues to increase.

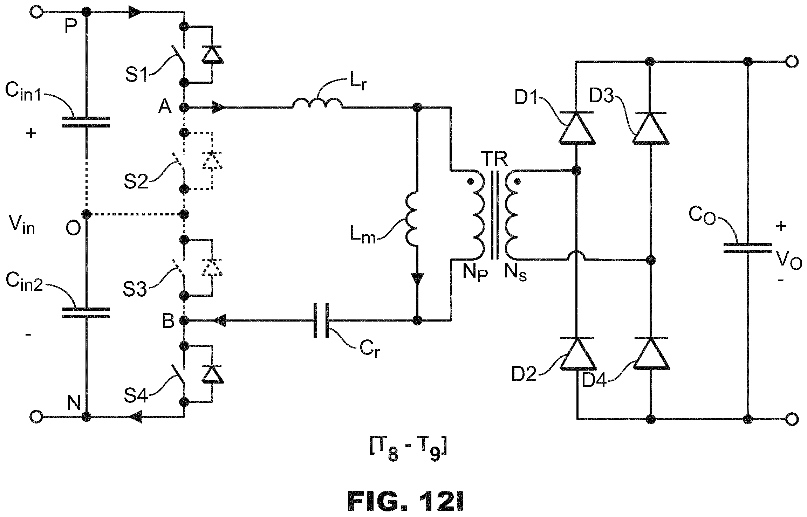

During time period $(t_8, t_9)$, as shown in FIG. 12I, primary switching device $S_1$ turns on at ZVS condition. Phase-leg output voltage $V_{AB}$ remains at ½$V_{in}$ and current $i_{Lr}$ continues to increase.

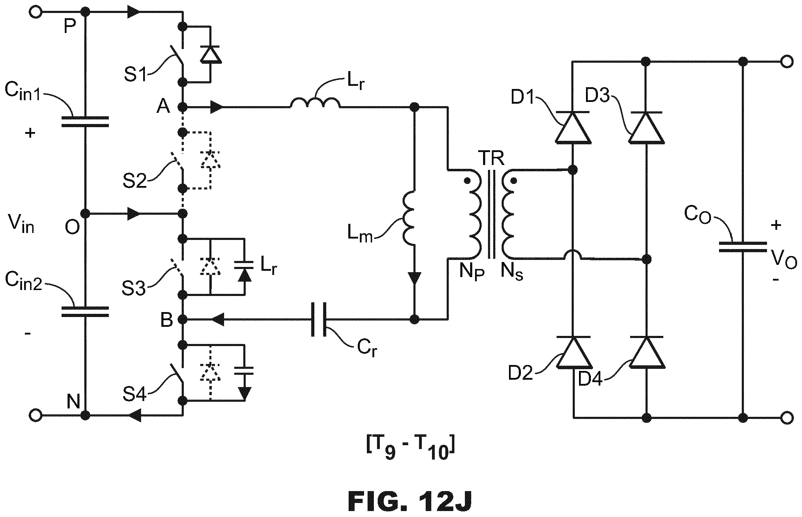

During time period $(t_9, t_{10})$, as shown in FIG. 12J, capacitor $C_{S4}$ charges to ½ $V_{in}$ and capacitor $C_{S3}$ completely discharges, after primary switching device $S_4$ becomes open. Current $i_{Lr}$ begins to decrease. Phase-leg output voltage $V_{AB}$ falls to ½ $V_{in}$, as a result of the charging and discharging in capacitors $C_{S4}$ and $C_{S3}$.

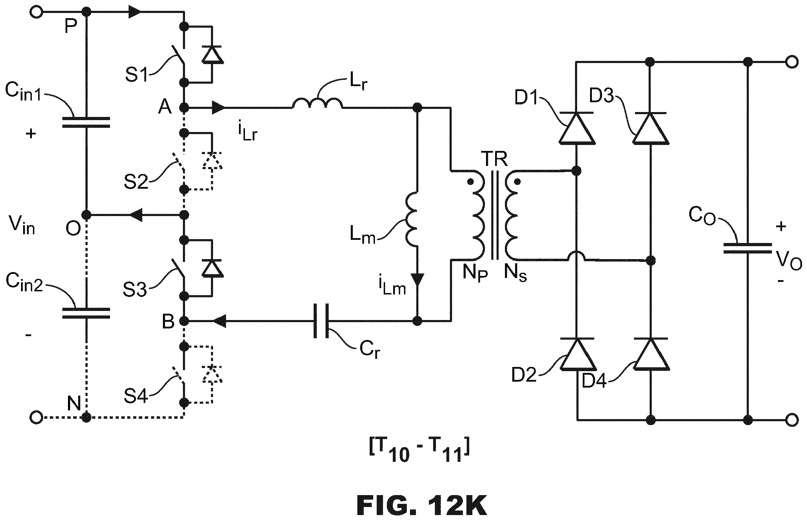

During time period $(t_{10}, t_{11})$, as shown in FIG. 12K, primary switching device $S_3$ turns on at ZVS condition. Phase-leg output voltage $V_{AB}$ remains at ½ $V_{in}$ and current $i_{Lr}$ continues to decrease.

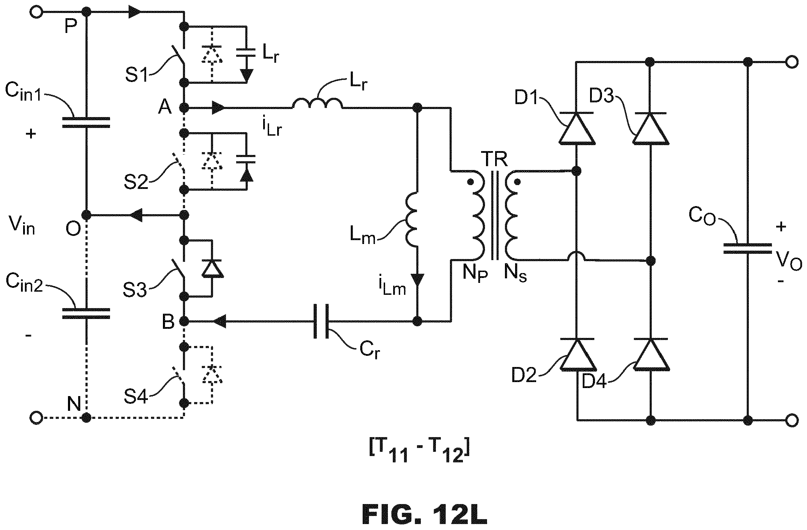

During time period $(t_{11}, t_{12})$, as shown in FIG. 12L, capacitor $C_{S1}$ charges to ½$V_{in}$ and capacitor $C_{S2}$

discharges completely, after primary switching device $S_1$ is turned off. Phase-leg output voltage $V_{AB}$ goes to zero volts, as a result of the charging and discharging in capacitors $C_{S1}$ and $C_{S2}$. Current $i_{Lr}$ continues to decrease.

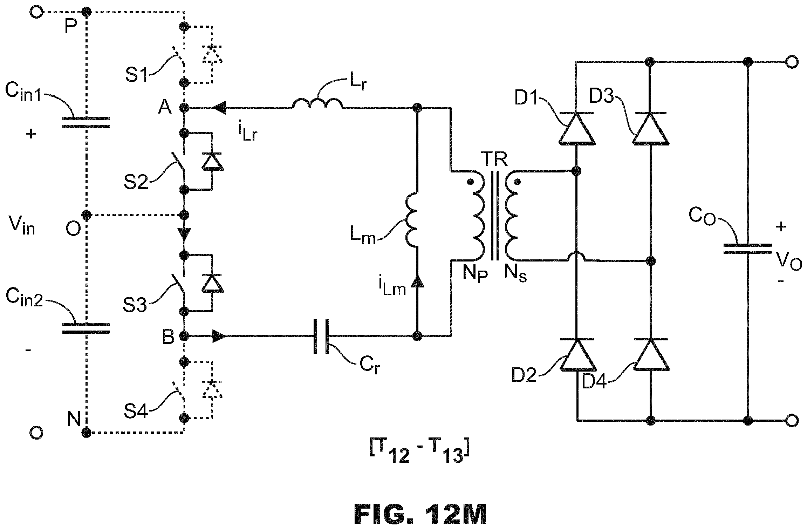

During time period ($t_{12}$, $t_{13}$), as shown in FIG. 12M, primary switching device $S_2$ turns on at ZVS condition. Phase-leg output voltage $V_{AB}$ remains at zero volts and current $i_{Lr}$ continues to decrease.

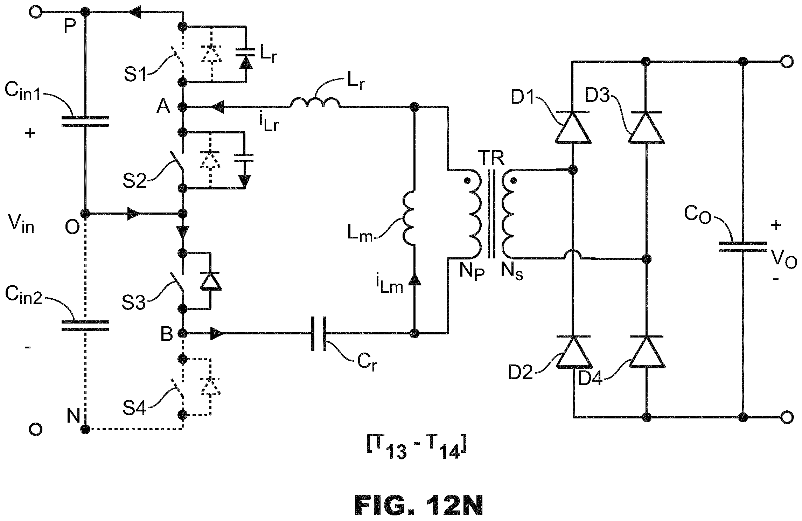

During time period ($t_{13}$, $t_{14}$), as shown in FIG. 12N, capacitor $C_{S2}$ charges to ½ $V_{in}$ and capacitor $C_{S1}$ discharges completely, after primary switching device $S_2$ is turned off. Phase-leg output voltage $V_{AB}$ rises to ½ $V_{in}$ and current $i_{Lr}$ begins to increase, as a result of the charging and discharging in capacitors $C_{S2}$ and $C_{S1}$.

During time period ($t_{14}$, $t_{15}$), as shown in FIG. 120, primary switching device $S_1$ turns on at ZVS condition. Phase-leg output voltage $V_{AB}$ remains at ½$V_{in}$ and current $i_{Lr}$ continues to increase.

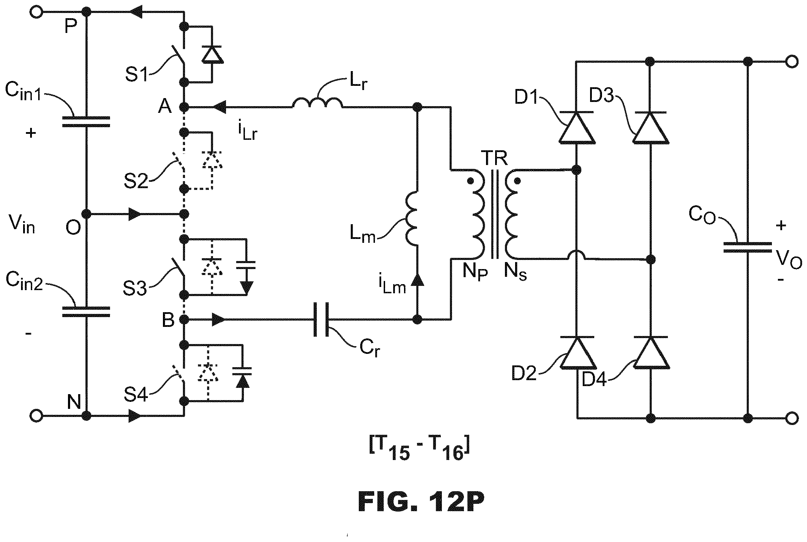

During time period ($t_{15}$, $t_{16}$), as shown in FIG. 12P, capacitor $C_{S3}$ charges to ½ $V_{in}$ and capacitor $C_{S4}$ discharges completely, after primary switching device $S_3$ is turned off. Phase-leg output voltage $V_{AB}$ becomes $V_{in}$, as a result of the charging and discharging in capacitors $C_{S3}$ and $C_{S4}$. Current $i_{Lr}$ continues to increase.

As all the primary switching devices turn on at ZVS conditions, the 3-level modulation scheme of the embodiment of the present invention significantly reduce total switching loss.

Advantages of the three-level modulation scheme of the present invention: A. Reducing output voltage

The three-level modulation scheme of the embodiment of the present invention generates, across the series-connected $L_r$-$C_r$-$L_m$ resonant circuit, controllable phase-leg output voltage $V_{AB}$, which includes DC and AC components. In this embodiment, during LLC resonant converter operations, resonant capacitor $C_r$ blocks the DC component, so that only the AC component appears across the primary-side windings of transformer TR. When device switching frequency $f_{sw}$ equals reso-

$$f_r = \frac{\sqrt{L_r C_r}}{2\pi}$$

nant frequency and when duration φ=0, output voltage $V_O$ equals the average of the product of the rectified AC component of phase-leg output voltage $V_{AB}$ and transformer TR's voltage gain. As transformer TR's voltage gain is the turns ratio

$$\frac{N_S}{N_P},$$

where $N_S$ and $N_P$ are the numbers of turns in the secondary-side winding and the primary-side winding, respectively, output voltage $V_O$ is given by:

$$V_O = \frac{N_P \overline{V_{AB\_ac}}}{N_S},$$

where $\overline{V_{AB\_ac}}$ is the average of the rectified AC component of phase-leg output voltage $V_{AB}$. For a desired value of duration φ, the average voltage of the rectified AC component reduces, if switching frequency $f_r$ is fixed. Accordingly, output voltage $V_O$ also decreases. Thus, the three-level modulation scheme of the embodiment of the present invention can be used to regulate output voltage $V_O$ without affecting switching frequency $f_r$.

B. Balancing the current stress in each primary switching device

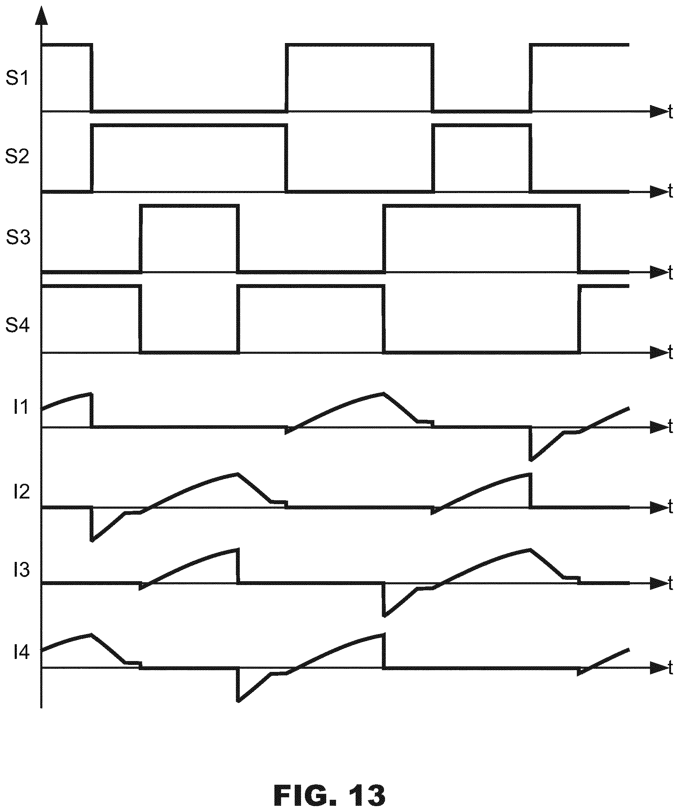

The "on"-resistance of a power device gives rise to a conduction loss. In SHB LLC resonant converter 1000 of FIG. 10A, primary switching devices $S_1$ to $S_4$ incur conduction loss when they are conducting. FIG. 13 shows control switch voltages $S_1$ to $S_4$ in primary switching devices $S_1$ to $S_4$, and the contemporaneous currents $I_1$ to $I_4$ flowing through them during switching period $T_{sw}$, under the three-level modulation scheme of the embodiment of the present invention, without accounting for the effects of any dead-time. Currents $I_1$ to $I_4$ have the same root-mean-square (RMS) value, thereby balancing the thermal stress equally among the primary switching devices. Consequently, longer life in these devices may be expected, increasing the reliability of SHB LLC resonant converter 1000.

DC-link capacitor voltage balancing

Ideally, when the top and bottom capacitors (e.g., capacitors $C_{in1}$ and $C_{in2}$) deliver the same power to the resonant tank under the three-level modulation scheme of the embodiment of the present invention, their DC-link capacitor voltage is automatically balanced without any additional control. However, both the parameter mismatch of the equivalent series resistances (ESRs) and the capacitances of the DC-link capacitors and the timing mismatch of the switch control or gate signals are inevitable in any practical SHB LLC resonant converter. These mismatches result in DC-link capacitor voltage imbalances.

The embodiment of the present invention provides a method to balance the DC-link capacitor voltages and to keep the SHB LLC resonant converter operating in a safe range. When capacitor $C_{in1}$ has a greater voltage than capacitor $C_{in2}$, all transitions in the switch control signals to primary switching devices $S_1$ and $S_2$ are delayed by a short time period and all transitions in the switch control signals to primary switching devices $S_3$ and $S_4$ are brought forward by the same amount. Similarly, when capacitor $C_{in2}$ has a greater voltage than ca-

pacitor $C_{in1}$, all transitions in the switch control signals to primary switching devices $S_1$ and $S_2$ are brought forward by a short time period and all transitions in the switch control signals to primary switching devices $S_3$ and $S_4$ are delayed by the same amount. The short time period adjustment preferably should not exceed 5% of the switching period $T_{sw}$ to avoid any adverse effect on the normal operations of the SHB LLC resonant converter.

Achieving a wide output voltage range operation by combining pulse frequency modulation (PFM) with the three-level modulation scheme

As mentioned above, maximum efficiency is achieved when the SHB LLC resonant converter is operated at an operating point at or very close to resonant frequency $f_r$. To achieve a wide output voltage range, conventional control modulates switching frequency $f_{sw}$ to adjust the DC voltage gain. However, switching frequency control moves the operating point away from maximum circuit efficiency. Further, for a very wide output voltage range, even such switching frequency control is unable to achieve the required DC voltage gain due to the fixed circuit parameters.

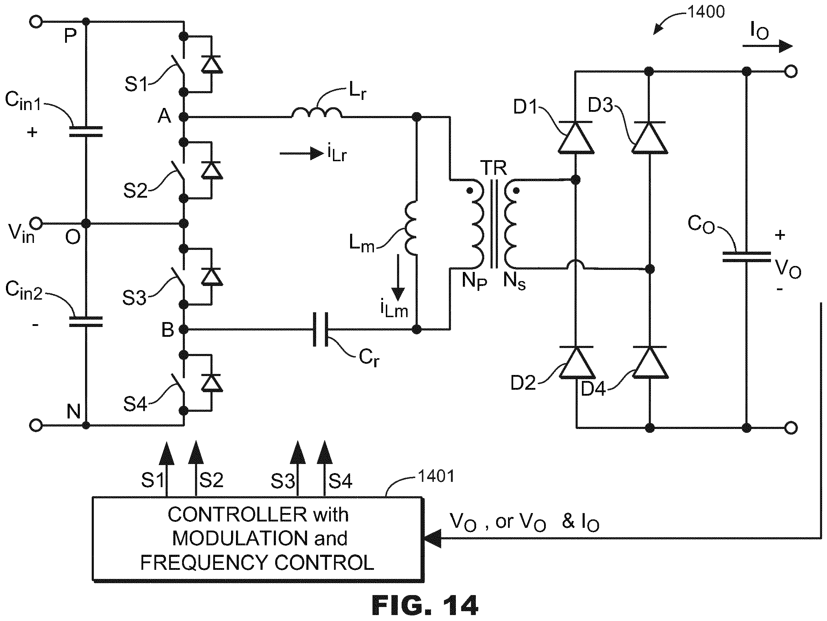

The inventors of the present invention recognize that an SHB LLC resonant converter can provide a wide output voltage range, while efficiently achieving desirable different DC voltage gains at or near the resonant frequency (i.e., a narrower input switching frequency range), using a combination of different modulation schemes. Moreover, the three-level modulation scheme of the embodiment of the present invention achieves the wide output voltage range and the circuit gains even when the circuit parameter values are fixed. FIG. 14 is a schematic diagram showing SHB LLC resonant converter 1400, which includes control circuit 1401 that generates switch control signals to primary switching devices $S_1$ to $S_4$ based on output voltage $V_O$ (and, optionally, output current $I_O$), according to one embodiment of the present invention.

Control circuit 1401 in SHB LLC resonant converter 1400 may use output voltage $V_O$ as its main control target. Output current $I_O$ may also be used as either a separate control target or a feedback signal representative of a load condition. A reference value representative of each control target may be generated internally in control circuit 1401 or from an external source. Based on a difference between the sensed voltage $V_O$ (or the sensed current $I_O$) and the corresponding reference value, control circuit 1401 switches among two or more modulation schemes that operate switching devices $S_1$ to $S_4$ on the primary-side phase leg of SHB LLC resonant controller 1401. One or more of the control targets may be used to determine values of other control parameters, such as switching frequency $f_{sw}$ and duty cycles of signals in the selected modulation scheme. The signals that operate primary-side switching devices $S_1$ to $S_4$ are generated based on the selected modulation scheme and other control parameter values.

The conventional symmetrical frequency modulation scheme provides a desired output voltage gain by varying the switching frequency $f_{sw}$ about resonant frequency $f_r$. While the proposed three-level modulation scheme provides extra output voltage gains at the maximum allowable switching frequency by controlling the durations the primary switching devices are conducting. Accordingly, the embodiment of the present invention provides a control method that combines a selected modulation scheme and frequency control to achieve a predetermined output voltage range. (The modulation schemes may overlap in their respective output voltage regulation ranges.) Modulation scheme selection of the embodiment under the present invention may be based, for example, on control parameters such as voltage control targets, load conditions, and an allowable operating frequency range.

FIG. 15A illustrates, in SHB LLC resonant converter 1000, control signals for primary switching devices $S_1$ to $S_4$ and phase-leg output voltage $V_{AB}$, as the control scheme switches from a symmetrical modulation scheme to a three-level modulation scheme. FIG. 15B illustrates, in SHB LLC resonant converter 1000, control signals for primary switching devices $S_1$ to $S_4$ and phase-leg output voltage $V_{AB}$, as the control scheme switches from a three-level modulation scheme to a symmetrical modulation scheme, according to one embodiment of the present invention. As shown in FIG. 15A, switching from a symmetrical modulation scheme (interval 1501) to the three-level modulation scheme (interval 1592) of the embodiment of the present invention requires no transition period, as the control target for phase-leg output voltage $V_{AB}$ changes from a high voltage to a low voltage in output voltage $V_O$. Likewise, as shown in FIG. 15B, switching from the three-level modulation scheme of the embodiment of the present invention (interval 1503) to a symmetrical modulation scheme (interval 1504) also requires no transition period, as the control target for phase-leg output voltage $V_{AB}$ changes from a low voltage to a high voltage in output voltage $V_O$. In one embodiment, the symmetrical modulation scheme includes variable-frequency modulation. In another embodiment, the symmetrical modulation scheme includes constant-frequency modulation.

Extension for other topologies

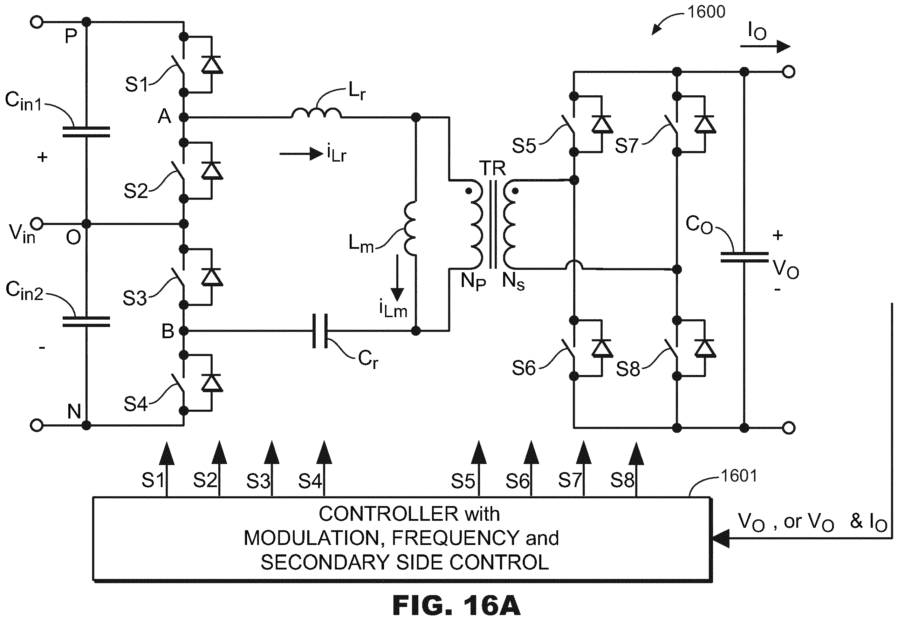

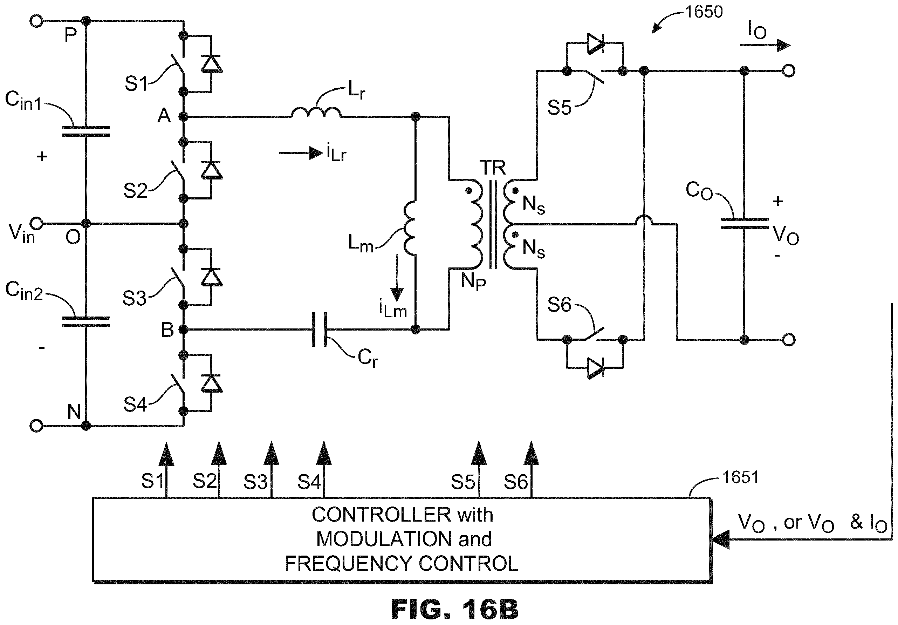

The embodiment of the present invention is equally applicable in SHB LLC resonant converters with other secondary-side topologies to provide a wide output voltage range with the same beneficial narrow device switching frequency. FIGs. 16A and 16B show, respectively, (i) SHB LLC resonant converter 1600 with a full-bridge synchronous rectifier on the secondary side, and (ii) SHB LLC resonant converter 1650 with center-tapped transformer TR and synchronous rectifiers $S_5$ and $S_6$ on the secondary side, according to one embodiment of the present invention. In the SHB LLC resonant converter 1600, the control circuit 1601 may combine the methods discussed with respect to FIG. 10B above with conventional secondary-side control schemes to generate the signals to operate the switching devices $S_1$ to $S_4$ on the primary-side and the switching devices $S_5$ to $S_8$ on the secondary-side. In the SHB LLC resonant converter 1650, the control circuit 1651 may combine the methods discussed with respect to FIG. 10B above with conventional secondary-side control schemes to generate the signals to operate the switching devices $S_1$ to $S_4$ on the primary-side and the switching devices $S_5$ and $S_6$ on the secondary-side. The embodiment of the present invention is equally applicable to an SHB LLC resonant converter in which the switching devices $S_5$ to $S_8$ on the secondary-side of SHB LLC resonant converter 1600, or the switching devices $S_5$ to $S_6$ on the secondary-side of SHB LLC resonant converter 1650, are replaced by diodes.

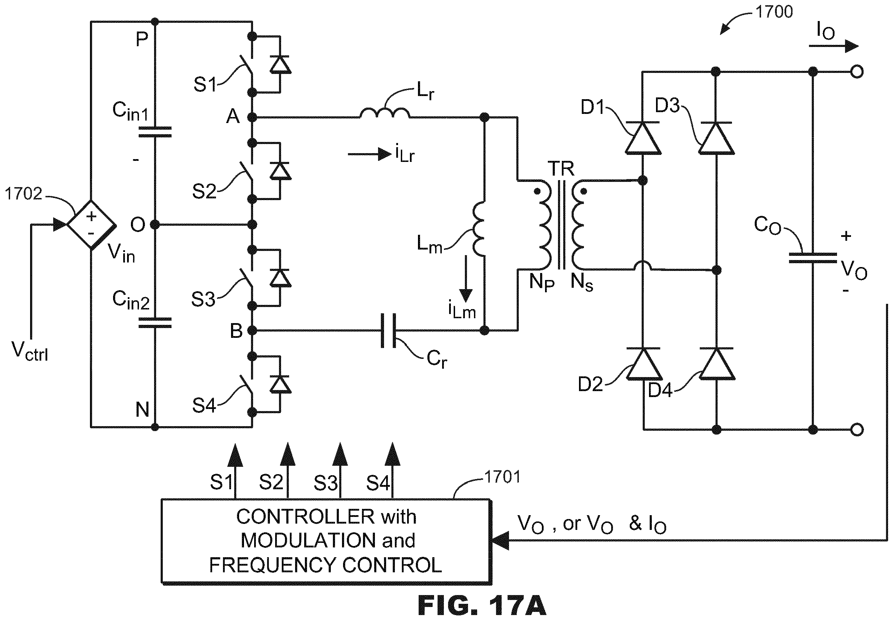

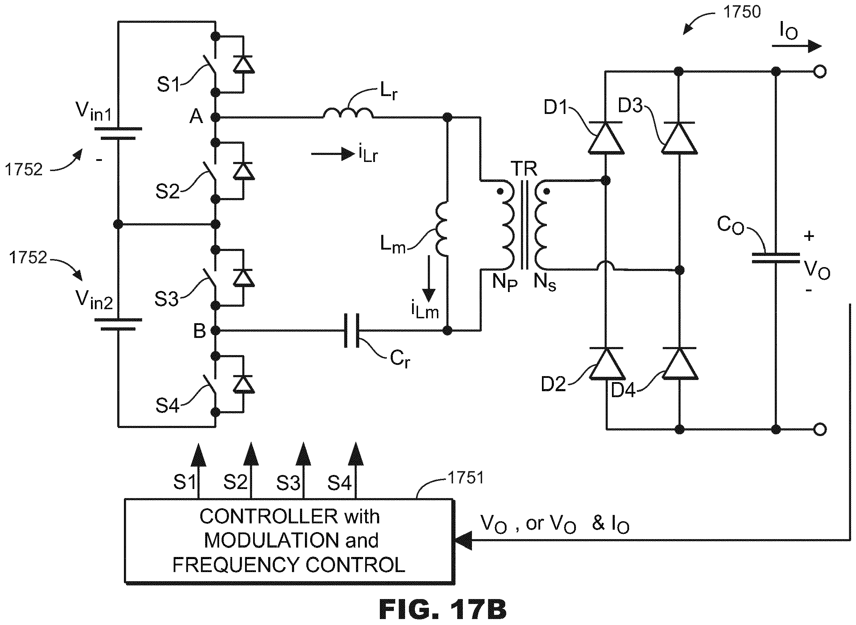

The embodiment of the present invention is also applicable to SHB LLC resonant converters with a variable DC input voltage, or with two different input voltages, such as shown in FIGs. 17A and 17B, respectively. FIGs. 17A, and 17B show, respectively, (i) SHB LLC resonant converter 1700 with variable DC input voltage source 1702, and (i) SHB LLC resonant converter 1750 with DC input voltages $V_{in1}$ and $V_{in2}$, respectively, controlled according to one embodiment of the present invention. As shown in FIG. 17A, variable DC input voltage source 1702 may be controlled by signal $V_{ctrl}$, which may be internally generated or provided externally. Combining a control method for signal $V_{ctrl}$ with any of the methods of the embodiments of the present invention discussed above may further extend the output voltage range or further reduce the device switching frequency range of the SHB LLC resonant converter 1700.

## Claims

1. A power converter having first and second input terminals configured to receive an input signal from a voltage source ($V_{in}$) to provide an output voltage ($V_o$) or an output current ($I_o$) to at least one load, wherein the power converter (700, 800, 1000, 1400, 1600, 1650, 1700, 1750) comprises:

    (a) a transformer (TR) having primary and secondary windings;
    (b) a primary-side circuit comprising:

        (i) first, second, third, and fourth series-connected switching devices ($S_1$ to $S_4$) connected across the first and second input terminals, the first and second switching devices being controlled by first and second switch control signals, respectively, and the third and the fourth switching devices being controlled by third and fourth switch control signals, respectively; and
        (ii) a resonant tank circuit, the resonant circuit being coupled α) between a first electrical node (A), being a common electrical node between the first and second switching devices ($S_1$, $S_2$), and a second electrical node (B), being a common electrical node between the third and fourth switching devices ($S_3$, $S_4$); and β) to the primary winding of the transformer (TR);

    (c) a secondary-side circuit coupled to the secondary winding of the transformer (TR), the secondary-side circuit comprising a filter capacitor ($C_o$) providing the output voltage ($V_o$) or output current ($I_o$) to the at least one load; and
    (d) a control circuit (801, 1401, 1601, 1651, 1701, 1751), that is configured to generate the first, second, third, and fourth switch control signals according to a first modulation scheme based on the output voltage (Vo) or the output current (Io),

the first modulation scheme being **characterized by** the following four items:

    (i) the first and the second switch control signals are substantially complementary with each other and the third and the fourth switch control signals are substantially complementary with each other, wherein a dead-time is implemented,
    (ii) the first, second, third, and fourth switch control signals are periodic with a common switching period,
    (iii) within the common switching period, α) each switch control signal has two rising edges and two falling edges; and either β) the first rising edge of the first switch control signal lags the first rising edge of the fourth switch control signal by a first predetermined time, while the second rising edge of the first switch control signal leads the second rising edge for the fourth switch control signal by a second predetermined time, or γ) the first rising edge of the first switch control signal leads the first rising edge of the fourth switch control signal by a first predetermined time, while the second rising edge of the first switch control signal lags the second rising edge for the fourth switch control signal by a second predetermined time, and
    (iv) the control circuit is configured to vary the switching period, the first predetermined time, and the second predetermined time.

2. The power converter of Claim 1, wherein one of the modulation schemes operates as a symmetrical modulation scheme, in which the switch control signals to the switching devices ($S_1$ to $S_4$) in each pair of the first and second pairs of switching devices ($S_1$ to $S_4$) are complementary, wherein each pair of the first and second pairs of switching devices ($S_1$ to $S_4$) comprises first ($S_1$, $S_3$,) and second switching devices ($S_2$, $S_4$), and wherein the switch control signals that are configured to operate the first switching devices ($S_1$, $S_3$) of the first and second pairs of the switching devices ($S_1$ to $S_4$) are synchronized, and are 50% duty cycle switching signals.

3. The power converter of Claim 1, wherein one of the modulation schemes is configured to operate as an asymmetrical modulation scheme, in which the switch control signals to the switching devices ($S_1$ to $S_4$) in each pair of the first and second pairs of switching devices ($S_1$ to $S_4$) are complementary, wherein each pair of the first and second pairs of switching devices ($S_1$ to $S_4$) comprises first ($S_1$, $S_3$) and second switching devices ($S_2$, $S_4$), and wherein the switch control signal that is configured to operate the first switching device ($S_1$) of the first pair of switching devices ($S_1$ to $S_4$) and the switch control signal that is configured to operate the second switching device ($S_4$) of the second pair of switching devices ($S_1$ to $S_4$) are 25% duty cycle signals operating under a common switching frequency, and are phase-shifted relative to each other by 180°.

4. The power converter of Claim 1, further comprising a first input capacitor ($C_{in1}$) coupled across the first and second switching devices ($S_1$, $S_2$) and a second input capacitor ($C_{in2}$) coupled across the third and fourth switching devices ($S_3$, $S_4$); wherein, when the first input capacitor ($C_{in1}$) has a voltage greater than that of the second input capacitor ($C_{in2}$), the control circuit (801, 1401, 1601, 1651, 1701, 1751) is configured to delay transitions in the first and second switch control signals and brings forward in time transitions of the third and fourth switch control signals by the same amount, when the first input capacitor ($C_{in1}$) has a voltage less than that of the second input capacitor ($C_{in2}$), the control circuit is configured to bring forward in time transitions in the first and second switch control signals and delays transitions of the third and fourth switch control signals.

5. The power converter of Claim 1, wherein the LC resonant circuit comprises a resonant inductor ($L_r$), a magnetizing inductor ($L_m$) and a resonant capacitor ($C_r$), the resonant inductor ($L_r$), the magnetizing inductor ($L_m$) and the resonant capacitor ($C_r$) are connected in series, and wherein the first winding of the isolation transformer (TR) is connected in parallel with the magnetizing inductor ($L_m$), and the magnetizing inductor ($L_m$) is connected across the third and fourth electrical nodes.

6. The power converter of Claim 1, wherein each pair of the first and second pairs of switching devices comprises series-connected first ($S_1$, $S_3$) and second switching devices ($S_2$, $S_4$), wherein the first electrical node A is a common terminal between the series-connected switching devices of the first pair of switching devices ($S_1$, $S_2$) and wherein the second electrical node B is a common terminal between the series-connected switching devices of the second pair of switching devices ($S_3$, $S_4$).

7. The power converter of Claim 1, wherein the secondary-side circuit further comprises a rectifier stage that is coupled to the second winding of the isolation transformer (TR) and the filter capacitor ($C_o$).

8. The power converter of Claim 7, wherein the rectifier stage comprises synchronous rectifiers or diodes ($D_1$ to $D_4$), and the synchronous rectifiers or diodes ($D_1$ to $D_4$) are connected in a full-bridge configuration or a half-bridge configuration.

9. The power converter of Claim 1, wherein the control circuit (801, 1401, 1601, 1651, 1701, 1751) is configured to transition between selected modulation schemes using one or more of: frequency shift, phase shift, duty cycle shift, and any of their combinations.

10. The power converter of Claim 1, wherein (i) when the first and fourth switching devices ($S_1$, $S_4$) are both non-conducting, the voltage across the first and second electrical nodes (A, B) goes to a first voltage level, (ii) when one of the first and fourth switching devices ($S_1$, $S_4$) is conducting, the voltage across the first and second electrical nodes (A, B) goes to a second voltage level, and (iii) when the first and fourth switching devices ($S_1$, $S_4$) are both conducting, the voltage across the first and second electrical node (A, B) goes to a third voltage level, wherein the first voltage level is ground, the second voltage level is substantially one-half the input signal, the third voltage level is substantially the input signal.

11. The power converter of Claim 1, wherein the control circuit (801, 1401, 1601, 1651, 1701, 1751) is configurable to generate the first, second, third, and fourth switch control signals according to a second modulation scheme different from the first modulation scheme, the second modulation scheme being configured to operate as a symmetrical modulation scheme, one of the first and second modulation schemes comprises variable-frequency modulation, one of the first and second modulation schemes comprises constant-frequency modulation control, the control circuit (801, 1401, 1601, 1651, 1701, 1751) being configured to vary a gain of the power converter by operating the power converter under the first modulation scheme for a first time period and operating the power converter under the second modulation scheme for a second time period.

12. The power converter of Claim 1, wherein the first predetermined time and the second predetermined time are equal.

13. The power converter of Claim 1, wherein each switching device ($S_1$ to $S_4$) is configured to conduct substantially 50% of each switching period, the control circuit (801, 1401, 1601, 1651, 1701, 1751) being configured to decrease the output voltage, the output power, or both, by increasing the first predetermined time.

14. The power converter of Claim 1, wherein each switching device ($S_1$ to $S_4$) is configured to conduct substantially 50% of each switching period, the control circuit (801, 1401, 1601, 1651, 1701, 1751) being configured to increase the output voltage, the output power or both by decreasing the first predetermined time.

**Patentansprüche**

1. Stromwandler mit ersten und zweiten Eingangsanschlüssen, der ausgestaltet ist, um ein Eingangssignal von einer Spannungsquelle ($V_{in}$) zu empfangen, und um eine Ausgangsspannung ($V_o$) oder einen Ausgangsstrom ($I_o$) an mindestens eine Last zu liefern, wobei der Stromwandler (700, 800, 1000, 1400, 1600, 1650, 1700, 1750) umfasst:

(a) einen Transformator (TR) mit Primär- und Sekundärwicklung;
(b) eine primärseitige Schaltung, umfassend:

(i) eine erste, zweite, dritte und vierte in Reihe geschaltete Schaltvorrichtung ($S_1$ bis $S_4$), die über den ersten und zweiten Eingangsanschlüssen geschaltet sind, wobei die ersten und zweiten Schaltvorrichtung durch erste bzw. zweite Schaltsteuersignal gesteuert werden, und die dritte und vierte Schaltvorrichtung durch dritte bzw. vierte komplementäre Schaltsteuersignale gesteuert werden; und
(ii) eine Resonanztankschaltung, wobei die Resonanztankschaltung

α) zwischen einem ersten elektrischen Knoten (A), der ein gemeinsamer elektrischer Knoten zwischen der ersten und der zweiten Schaltvorrichtung (S1, S2) ist, und einem zweiten elektrischen Knoten (B), der ein gemeinsamer elektrischer Knoten zwischen der dritten und der vierten Schaltvorrichtung (S3, S4) ist, und
β) mit der Primärwicklung des Transformators (TR) gekoppelt ist;

(c) eine sekundärseitige Schaltung, die mit der Sekundärwicklung des Transformators (TR) gekoppelt ist, wobei die sekundärseitige Schaltung einen Filterkondensator ($C_o$) umfasst, der die Ausgangsspannung ($V_o$) oder der Ausgangsstrom ($I_o$) an die mindestens eine Last liefert; und
(d) eine Steuerschaltung (801, 1401, 1601, 1651, 1701, 1751), die ausgestaltet ist, um auf Basis der Ausgangsspannung ($V_o$) oder des Ausgangsstroms ($I_o$) die ersten, zweiten, dritten und vierten Schaltsteuersignale gemäß einem ersten Modulationsschema zu erzeugen, wobei das erste Modulationsschema **gekennzeichnet ist durch** die folgenden vier Punkte:

(i) die ersten und zweiten Schaltsteuersignale sind im Wesentlichen komplementär zueinander, und die dritten und vierten Schaltsteuersignale sind im Wesentlichen komplementär zueinander, wobei eine Totzeit implementiert wird,
(ii) die ersten, zweiten, dritten und vierten Schaltsteuersignale sind periodisch mit einer gemeinsamen Schaltperiode,
(iii) innerhalb der gemeinsamen Schaltperiode: α) jedes Schaltsteuersignal hat zwei ansteigende Flanken und zwei abfallende Flanken; und entweder β) die erste ansteigende Flanke des ersten Schaltsteuersignals eilt der ersten ansteigenden Flanke des vierten Schaltsteuersignals um eine erste vorbestimmte Zeit nach, während die zweite ansteigende Flanke des ersten Schaltsteuersignals der zweiten ansteigenden Flanke des vierten Schaltsteuersignals um eine zweite vorbestimmte Zeit vorauseilt, oder γ) die erste ansteigende Flanke des ersten Schaltsteuersignals eilt der ersten ansteigenden Flanke des vierten Schaltsteuersignals um eine erste vorbestimmte Zeit voraus, während die zweite ansteigende Flanke des ersten Schaltsteuersignals der zweiten ansteigenden Flanke des vierten Schaltsteuersignal um eine zweite vorbestimmte Zeit nacheilt, und
(iv) die Steuerschaltung ist ausgestaltet, um die Schaltperiode, die erste vorbestimmte Zeit und die zweite vorbestimmte Zeit zu variieren.

2. Stromwandler nach Anspruch 1, wobei eines der Modulationsschemen als symmetrisches Modulationsschema arbeitet, bei dem die Schaltsteuersignale zu den Schaltvorrichtungen ($S_1$ bis $S_4$) in jedem Paar des ersten und zweiten Paares von Schaltvorrichtungen ($S_1$ bis $S_4$) komplementär sind, wobei jedes Paar des ersten und zweiten Paares von Schaltvorrichtungen ($S_1$ bis $S_4$) erste Schaltvorrichtungen ($S_1$, $S_3$) und zweite Schaltvorrichtungen ($S_2$, $S_4$) umfasst, und wobei die Schaltsteuersignale, die ausgestaltet sind, um die ersten Schaltvorrichtungen ($S_1$, $S_3$) des ersten und zweiten Paares der Schaltvorrichtungen ($S_1$ bis $S_4$) zu betätigen, synchronisiert sind, und Schaltsignale mit einem Tastverhältnis von 50% sind.

3. Stromwandler nach Anspruch 1, wobei eines der Modulationsschemen ausgestaltet ist, um als ein asymmetrisches Modulationsschema zu arbeiten, bei dem die Schaltsteuersignale zu den Schaltvorrichtungen ($S_1$ bis $S_4$) in jedem Paar des ersten und zweiten Paares von Schaltvorrichtungen ($S_1$ bis $S_4$) komplementär sind, wobei jedes Paar des ersten und zweiten Paars von Schaltvorrichtungen ($S_1$ bis $S_4$) erste Schaltvorrichtungen ($S_1$, $S_3$) und zweite Schaltvorrichtungen ($S_2$, $S_4$) umfasst, und wobei das Schaltsteuersignal, das ausgestaltet ist, um die erste Schaltvorrichtung ($S_1$) des ersten Paares von Schaltvorrichtungen ($S_1$ bis $S_4$) zu betätigen, und das Schaltsteuersignal, das ausgestaltet ist, um die zweite Schaltvorrichtung ($S_4$) des zweiten Paares von Schaltvorrichtungen ($S_1$ bis $S_4$) zu betätigen, Signale mit einem Tastverhältnis von 25% sind, die mit einer gemeinsamen Schaltfrequenz arbeiten und relativ zueinander um 180° phasenverschoben sind.

4. Stromwandler nach Anspruch 1, ferner umfassend einen ersten Eingangskondensator ($C_{in1}$), der über die erste und zweite Schaltvorrichtung ($S_1$, $S_2$) geschaltet ist, und einen zweiten Eingangskondensator ($C_{in2}$), der über die dritte und vierte Schaltvorrichtung ($S_3$, $S_4$) geschaltet ist; wobei, wenn der erste Eingangskondensator ($C_{in1}$) eine Spannung hat, die größer ist als die des zweiten Eingangskondensators ($C_{in2}$), die Steuerschaltung (801, 1401, 1601, 1651, 1701, 1751) ausgestaltet ist, um Übergänge in den ersten und zweiten Schaltsteuersignalen zu verzögern und um Übergänge der dritten und vierten Schaltsteuersignale um den gleichen Betrag zeitlich vorzuverlegen, wenn der erste Eingangskondensator ($C_{in1}$) eine Spannung hat, die kleiner ist als die des zweiten Eingangskondensators ($C_{in2}$), die Steuerschaltung ausgestaltet ist, um die Übergänge in den ersten und zweiten Schaltsteuersignalen zeitlich vorzuverlegen und die Übergänge in den dritten und vierten Schaltsteuersignalen zu verzögern.

5. Stromwandler nach Anspruch 1, wobei die LC-Resonanzschaltung einen Resonanzinduktor ($L_r$), ei-

nen Magnetisierungsinduktor ($L_m$) und einen Resonanzkondensator ($C_r$) umfasst, wobei der Resonanzinduktor ($L_r$), der Magnetisierungsinduktor ($L_m$) und der Resonanzkondensator ($C_r$) in Reihe geschaltet sind, und wobei die erste Wicklung des Trenntransformators (TR) parallel zu dem Magnetisierungsinduktor ($L_m$) geschaltet ist und der Magnetisierungsinduktor ($L_m$) über dem dritten und vierten elektrischen Knoten geschaltet ist.

6. Stromwandler nach Anspruch 1, wobei jedes Paar des ersten und zweiten Paares von Schaltvorrichtungen in Reihe geschaltete erste Schaltvorrichtungen ($S_1$, $S_3$) und zweite Schaltvorrichtungen ($S_2$, $S_4$) umfasst, wobei der erste elektrische Knoten A ein gemeinsamer Anschluss zwischen den in Reihe geschalteten Schaltvorrichtungen des ersten Paares von Schaltvorrichtungen ($S_1$, $S_2$) ist und wobei der zweite elektrische Knoten B ein gemeinsamer Anschluss zwischen den in Reihe geschalteten Schaltvorrichtungen des zweiten Paares von Schaltvorrichtungen ($S_3$, $S_4$) ist.

7. Stromwandler nach Anspruch 1, wobei die sekundärseitige Schaltung ferner eine Gleichrichterstufe umfasst, die mit der zweiten Wicklung des Trenntransformators (TR) und dem Filterkondensator ($C_o$) gekoppelt ist.

8. Stromwandler nach Anspruch 7, wobei die Gleichrichterstufe Synchrongleichrichter oder Dioden ($D_1$ bis $D_4$) umfasst, und die Synchrongleichrichter oder Dioden ($D_1$ bis $D_4$) in einer Vollbrücken-Konfiguration oder einer Halbbrücken-Konfiguration geschaltet sind.

9. Stromwandler nach Anspruch 1, wobei die Steuerschaltung (801, 1401, 1601, 1651, 1701, 1751) ausgestaltet ist, um zwischen ausgewählten Modulationsschemen umzuschalten, und zwar unter Verwendung von einem oder mehreren von: Frequenzverschiebung, Phasenverschiebung, Tastverhältnisverschiebung und irgendeiner von deren Kombinationen.

10. Stromwandler nach Anspruch 1, wobei, (i) wenn die erste und die vierte Schaltvorrichtung ($S_1$, $S_4$) beide nicht leitend sind, die Spannung über dem ersten und zweiten elektrischen Knoten (A, B) auf einen ersten Spannungspegel geht, (ii) wenn eine der ersten und vierten Schaltvorrichtung ($S_1$, $S_4$) leitend ist, die Spannung über dem ersten und dem zweiten elektrischen Knoten (A, B) auf einen zweiten Spannungspegel geht, und (iii) wenn die erste und vierte Schaltvorrichtung ($S_1$, $S_4$) beide leitend sind, die Spannung über dem ersten und zweiten elektrischen Knoten (A, B) auf einen dritten Spannungspegel geht, wobei der erste Spannungspegel Masse ist, der zweite Spannungspegel im Wesentlichen der Hälfte des Eingangssignals entspricht, und der dritte Spannungspegel im Wesentlichen dem Eingangssignal entspricht.

11. Stromwandler nach Anspruch 1, wobei die Steuerschaltung (801, 1401, 1601, 1651, 1701, 1751) ausgestaltet sein kann, um die ersten, zweiten, dritten und vierten Schaltsteuersignale gemäß einem zweiten Modulationsschema zu erzeugen, das sich von dem ersten Modulationsschema unterscheidet, wobei das zweite Modulationsschema ausgestaltet ist, um als ein symmetrisches Modulationsschema zu arbeitet, eines von dem ersten und zweiten Modulationsschema eine Modulation mit variabler Frequenz umfasst, eines von dem ersten und zweiten Modulationsschema eine Modulationssteuerung mit konstanter Frequenz umfasst, die Steuerschaltung (801, 1401, 1601, 1651, 1701, 1751) ausgestaltet ist, um eine Verstärkung des Stromwandlers zu variieren, indem der Stromwandler unter dem ersten Modulationsschema für eine erste Zeitperiode betrieben wird und der Stromwandler unter dem zweiten Modulationsschema für eine zweite Zeitperiode betrieben wird.

12. Stromwandler nach Anspruch 1, wobei die erste vorbestimmte Zeit und die zweite vorbestimmte Zeit gleich sind.

13. Stromwandler nach Anspruch 1, wobei jede Schaltvorrichtung ($S_1$ bis $S_4$) ausgestaltet ist, um im Wesentlichen für 50% jeder Schaltperiode leitend zu sein, wobei die Steuerschaltung (801, 1401, 1601, 1651, 1701, 1751) ausgestaltet ist, um die Ausgangsspannung, die Ausgangsleistung oder beides durch Erhöhen der ersten vorbestimmten Zeit zu vermindern.

14. Stromwandler nach Anspruch 1, wobei jede Schaltvorrichtung ($S_1$ bis $S_4$) ausgestaltet ist, um im Wesentlichen für 50% jeder Schaltperiode leitend zu sein, wobei die Steuerschaltung (801, 1401, 1601, 1651, 1701, 1751) ausgestaltet ist, um die Ausgangsspannung, die Ausgangsleistung oder beides durch Verringern der ersten vorbestimmten Zeit zu erhöhen.

**Revendications**

1. Convertisseur de puissance ayant des première et deuxième bornes d'entrée configurées pour recevoir un signal d'entrée provenant d'une source de tension ($V_{in}$) afin de fournir une tension de sortie ($V_o$) ou un courant de sortie ($I_o$) à au moins une charge, le convertisseur de puissance (700, 800, 1000, 1400, 1600, 1650, 1700, 1750) comprenant:

(a) un transformateur (TR) ayant des enroulements primaire et secondaire;
(b) un circuit côté primaire comprenant:

(i) des premier, deuxième, troisième et quatrième dispositifs de commutation connectés en série ($S_1$ à $S_4$) connectés entre les première et deuxième bornes d'entrée, les premier et deuxième dispositifs de commutation étant commandés par des premier et deuxième signaux de commande de commutation, respectivement, et les troisième et quatrième dispositifs de commutation étant commandés par des troisième et quatrième signaux de commande de commutation, respectivement; et
(ii) un circuit bouchon résonant, le circuit résonant étant couplé

α) entre un premier nœud électrique (A), qui est un nœud électrique commun entre les premier et deuxième dispositifs de commutation ($S_1$, $S_2$), et un deuxième nœud électrique (B), qui est un nœud électrique commun entre les troisième et quatrième dispositifs de commutation ($S_3$, $S_4$) ; et
β) à l'enroulement primaire du transformateur (TR);

(c) un circuit côté secondaire couplé à l'enroulement secondaire du transformateur (TR), le circuit côté secondaire comprenant un condensateur de filtrage ($C_o$) fournissant la tension de sortie ($V_o$) ou le courant de sortie ($I_o$) à l'au moins une charge; et
(d) un circuit de commande (801, 1401, 1601, 1651, 1701, 1751), qui est configuré pour générer les premier, deuxième, troisième et quatrième signaux de commande de commutation selon une première technique de modulation sur la base de la tension de sortie ($V_o$) ou du courant de sortie ($I_o$), la première technique de modulation étant **caractérisée par** les quatre points suivants:

(i) les premier et deuxième signaux de commande de commutation sont sensiblement complémentaires l'un de l'autre et les troisième et quatrième signaux de commande de commutation sont sensiblement complémentaires l'un de l'autre, un temps mort étant introduit,
(ii) les premier, deuxième, troisième et quatrième signaux de commande de commutation sont périodiques avec une période de commutation commune,
(iii) à l'intérieur de la période de commutation commune, α) chaque signal de commande de commutation a deux flancs montants et deux flancs descendants ; et soit β) le premier flanc montant du premier signal de commande de commutation est en retard d'un premier temps prédéterminé sur le premier flanc montant du quatrième signal de commande de commutation, tandis que le deuxième flanc montant du premier signal de commande de commutation est en avance d'un deuxième temps prédéterminé sur le deuxième flanc montant du quatrième signal de commande de commutation, soit γ) le premier flanc montant du premier signal de commande de commutation est en avance d'un premier temps prédéterminé sur le premier flanc montant du quatrième signal de commande de commutation, tandis que le deuxième flanc montant du premier signal de commande de commutation est en retard d'un deuxième temps prédéterminé sur le deuxième flanc montant du quatrième signal de commande de commutation, et

(iv) le circuit de commande est configuré pour faire varier la période de commutation, le premier temps prédéterminé et le deuxième temps prédéterminé.

2. Convertisseur de puissance selon la revendication 1, dans lequel l'une des techniques de modulation fonctionne comme une technique de modulation symétrique, où les signaux de commande de commutation destinés aux dispositifs de commutation ($S_1$ à $S_4$) sont complémentaires dans chaque paire parmi les première et deuxième paires de dispositifs de commutation ($S_1$ à $S_4$), dans lequel chaque paire parmi les première et deuxième paires de dispositifs de commutation ($S_1$ à $S_4$) comprend un premier ($S_1$, $S_3$) et un deuxième dispositif de commutation ($S_2$, $S_4$), et dans lequel les signaux de commande de commutation qui sont configurés pour actionner les premiers dispositifs de commutation ($S_1$, $S_3$) des première et deuxième paires de dispositifs de commutation ($S_1$ à $S_4$) sont synchronisés, et sont des signaux de commutation à rapport cyclique de 50%.

3. Convertisseur de puissance selon la revendication 1, dans lequel l'une des techniques de modulation est configurée pour fonctionner comme une technique de modulation asymétrique, où les signaux de commande de commutation destinés aux dispositifs de commutation ($S_1$ à $S_4$) sont complémentaires dans chaque paire parmi les première et deuxième paires de dispositifs de commutation ($S_1$ à $S_4$), dans lequel chaque paire parmi les première et deuxième paires de dispositifs de commutation ($S_1$ à $S_4$) comprend un premier ($S_1$, $S_3$) et un deuxième dispositif

de commutation ($S_2$, $S_4$), et dans lequel le signal de commande de commutation qui est configuré pour actionner le premier dispositif de commutation ($S_1$) de la première paire de dispositifs de commutation ($S_1$ à $S_4$) et le signal de commande de commutation qui est configuré pour actionner le deuxième dispositif de commutation ($S_4$) de la deuxième paire de dispositifs de commutation ($S_1$ à $S_4$) sont des signaux à rapport cyclique de 25% fonctionnant à une fréquence de commutation commune, et sont déphasés de 180° l'un par rapport à l'autre.

4. Convertisseur de puissance selon la revendication 1, comprenant en outre un premier condensateur d'entrée ($C_{in1}$) couplé aux bornes des premier et deuxième dispositifs de commutation ($S_1$, $S_2$) et un deuxième condensateur d'entrée ($C_{in2}$) couplé aux bornes des troisième et quatrième dispositifs de commutation ($S_3$, $S_4$); dans lequel, quand le premier condensateur d'entrée ($C_{in1}$) a une tension supérieure à celle du deuxième condensateur d'entrée ($C_{in2}$), le circuit de commande (801, 1401, 1601, 1651, 1701, 1751) est configuré pour retarder des transitions des premier et deuxième signaux de commande de commutation et avancer temporellement des transitions des troisième et quatrième signaux de commande de commutation de la même quantité, quand le premier condensateur d'entrée ($C_{in1}$) a une tension inférieure à celle du deuxième condensateur d'entrée ($C_{in2}$), le circuit de commande est configuré pour avancer temporellement des transitions des premier et deuxième signaux de commande de commutation et retarder des transitions des troisième et quatrième signaux de commande de commutation.

5. Convertisseur de puissance selon la revendication 1, dans lequel le circuit résonant LC comprend une inductance de résonance ($L_r$), une inductance de magnétisation ($L_m$) et un condensateur de résonance ($C_r$), l'inductance de résonance ($L_r$), l'inductance de magnétisation ($L_m$) et le condensateur de résonance ($C_r$) sont connectés en série, et dans lequel le premier enroulement du transformateur d'isolement (TR) est connecté en parallèle avec l'inductance de magnétisation ($L_m$), et l'inductance de magnétisation ($L_m$) est connectée entre les troisième et quatrième nœuds électriques.

6. Convertisseur de puissance selon la revendication 1, dans lequel chaque paire parmi les première et deuxième paires de dispositifs de commutation comprend un premier ($S_1$, $S_3$) et un deuxième dispositif de commutation ($S_2$, $S_4$) connectés en série, dans lequel le premier nœud électrique A est une borne commune entre les dispositifs de commutation connectés en série de la première paire de dispositifs de commutation ($S_1$, $S_2$) et dans lequel le deuxième nœud électrique B est une borne commune entre les dispositifs de commutation connectés en série de la deuxième paire de dispositifs de commutation ($S_3$, $S_4$).

7. Convertisseur de puissance selon la revendication 1, dans lequel le circuit côté secondaire comprend en outre un étage redresseur qui est couplé au second enroulement du transformateur d'isolement (TR) et au condensateur de filtrage ($C_o$).

8. Convertisseur de puissance selon la revendication 7, dans lequel l'étage redresseur comprend des redresseurs synchrones ou des diodes ($D_1$ à $D_4$), et les redresseurs synchrones ou les diodes ($D_1$ à $D_4$) sont connectés selon une configuration en pont complet ou une configuration en demi-pont.

9. Convertisseur de puissance selon la revendication 1, dans lequel le circuit de commande (801, 1401, 1601, 1651, 1701, 1751) est configuré pour effectuer des transitions entre des techniques de modulation sélectionnées utilisant un ou plusieurs mécanismes parmi : déplacement de fréquence, déplacement de phase, modulation de rapport cyclique, et n'importe laquelle de leurs combinaisons.

10. Convertisseur de puissance selon la revendication 1, dans lequel (i) quand les premier et quatrième dispositifs de commutation ($S_1$, $S_4$) sont tous les deux non conducteurs, la tension entre les premier et deuxième nœuds électriques (A, B) va jusqu'à un premier niveau de tension, (ii) quand l'un des premier et quatrième dispositifs de commutation ($S_1$, $S_4$) est conducteur, la tension entre les premier et deuxième nœuds électriques (A, B) va jusqu'à un deuxième niveau de tension, et (iii) quand les premier et quatrième dispositifs de commutation ($S_1$, $S_4$) sont tous les deux conducteurs, la tension entre les premier et deuxième nœuds électriques (A, B) va jusqu'à un troisième niveau de tension, le premier niveau de tension étant la masse, le deuxième niveau de tension étant sensiblement la moitié du signal d'entrée, le troisième niveau de tension étant sensiblement le signal d'entrée.

11. Convertisseur de puissance selon la revendication 1, dans lequel le circuit de commande (801, 1401, 1601, 1651, 1701, 1751) est configurable pour générer les premier, deuxième, troisième et quatrième signaux de commande de commutation selon une deuxième technique de modulation différente de la première technique de modulation, la deuxième technique de modulation étant configurée pour fonctionner comme une technique de modulation symétrique, l'une des première et deuxième techniques de modulation comprend une modulation à fréquence variable, l'une des première et deuxième techniques de modulation comprend une commande de modulation à fréquence constante, le circuit de commande (801, 1401, 1601, 1651, 1701, 1751) étant configuré pour faire varier un gain du convertisseur de puissance par exploitation du convertisseur de puissance sous la première technique de modulation pendant une première période de temps et exploitation du convertisseur de puissance sous la deuxième technique de modulation pendant une deuxième période de temps.

12. Convertisseur de puissance selon la revendication 1, dans lequel le premier temps prédéterminé et le deuxième temps prédéterminé sont égaux.

13. Convertisseur de puissance selon la revendication 1, dans lequel chaque dispositif de commutation ($S_1$ à $S_4$) est configuré pour conduire pendant sensiblement 50 % de chaque période de commutation, le circuit de commande (801, 1401, 1601, 1651, 1701, 1751) étant configuré pour diminuer la tension de sortie, la puissance de sortie, ou les deux, par augmentation du premier temps prédéterminé.

14. Convertisseur de puissance selon la revendication 1, dans lequel chaque dispositif de commutation ($S_1$ à $S_4$) est configuré pour conduire pendant sensiblement 50% de chaque période de commutation, le circuit de commande (801, 1401, 1601, 1651, 1701, 1751) étant configuré pour augmenter la tension de sortie, la puissance de sortie ou les deux par diminution du premier temps prédéterminé.

**FIG. 1A**

**FIG. 1B**

FIG. 2A

**FIG. 2B**

23

FIG. 3A

FIG. 3B

**FIG. 4**

FIG. 5A

**FIG. 5B**
*(PRIOR ART)*

28

FIG. 6A

**FIG. 6B**

**FIG. 7A**

FIG. 7B

S1   ON   OFF

S2

S3

S4

V_AB   V_in   T_sw   T_sw/2

FIG. 7C

EP 3 787 171 B1

FIG. 8

# FIG. 9A

SYMMETRICAL MODULATION 901

MODULATION-TRANSITION PERIOD 902

ASYMMETRICAL MODULATION 903

$V_{AB}$

$V_{in}$

$T_{sw}/2$

$V_{in}/2$

$T_{sw}/2$

$T_{sw}/4$

$3T_{sw}/4$

$3T_{sw}/4$

$T_{sw}$

$T_{sw}/4$

S4

S3

S2

S1

ON

OFF

FIG. 9B

FIG. 10A

FIG. 10B

FIG. 11

EP 3 787 171 B1

39

**FIG. 12A**

$[T_0 - T_1]$

FIG. 12B

$[T_1 - T_2]$

EP 3 787 171 B1

$[T_2 - T_3]$

**FIG. 12C**

[T₃ - T₄]

FIG. 12D

FIG. 12E

$[T_4 - T_5]$

[T₅ - T₆]

**FIG. 12F**

EP 3 787 171 B1

[T₆ - T₇]

**FIG. 12G**

**[T7 - T8]**

**FIG. 12H**

FIG. 12I

[T₈ - T₉]

$[T_9 - T_{10}]$

FIG. 12J

[$T_{10}$ - $T_{11}$]

**FIG. 12K**

EP 3 787 171 B1

FIG. 12L

$[T_{11} - T_{12}]$

EP 3 787 171 B1

FIG. 12M

[T₁₂ - T₁₃]

FIG. 12N

[T₁₃ - T₁₄]

FIG. 120

[T$_{14}$ - T$_{15}$]

FIG. 12P

[$T_{15}$ - $T_{16}$]

**FIG. 13**

FIG. 14

**FIG. 15A**

FIG. 15B

**FIG. 16A**

CONTROLLER with MODULATION, FREQUENCY and SECONDARY SIDE CONTROL

FIG. 16B

**FIG. 17A**

**FIG. 17B**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9263960 B2, M. Jovanovic and B. Irving
- US 20150229225 A1, Y. Jang and M. Jovanovic

**Non-patent literature cited in the description**

- **J. DENG et al.** Design Methodology of LLC Resonant Converters for Electric Vehicle Battery Chargers. *IEEE Transactions on Vehicular Technology,* May 2014, vol. 63 (4), 1581-1592
- **F. MUSAVI et al.** An LLC Resonant DC-DC Converter for Wide Output Voltage Range Battery Charging Applications. *IEEE Transactions on Power Electronics,* December 2013, vol. 28 (12), 5437-5445
- **R. BEIRANVAND et al.** A Design Procedure for Optimizing the LLC Resonant Converter as a Wide Output Range Voltage Source. *IEEE Transactions on Power Electronics,* August 2012, vol. 27 (8), 3749-3763
- **Z. FANG et al.** Optimal Design Methodology for LLC Resonant Converter in Battery Charging Applications Based on Time-Weighted Average Efficiency. *IEEE Transactions on Power Electronics,* October 2015, vol. 30 (10), 5469-5483
- **YANG JIAO ; MILAN M. JOVANOVIC.** Topology Evaluation and Comparison for Isolated Multilevel DC/DC Converter for Power Cell in Solid State Transformer. *proceedings of the APPLIED POWER ELECTRONICS CONFERENCE AND EXPOSITION, APEC,* March 2017, 802-809
- **U. MUMTAHINA ; P. J. WOLFS.** Multimode Optimization of the Phase-Shifted LLC Series Resonant Converter. *IEEE Transactions on Power Electronics,* December 2018, vol. 33 (12), 10478-10489
- **J. R. PINHEIRO ; I. BARBI.** *Proceedings of the 1992 International Conference on Industrial Electronics, Control, Instrumentation, and Automation, San Diego, CA, USA,* 1992, vol. 1, 173-178
- **Y. GU et al.** Three-level LLC series resonant DC/DC converter. *IEEE Transactions on Power Electronics,* July 2005, vol. 20 (4), 781-789
- **I. BARBI et al.** *IEEE Transactions on Power Electronics,* July 2004, vol. 19 (4), 918-927
- **S. ZONG et al.** Asymmetrical Duty Cycle-Controlled LLC Resonant Converter With Equivalent Switching Frequency Doubler. *IEEE Transactions on Power Electronics,* July 2016, vol. 31 (7), 4963-4973
- **A. COCCIA et al.** Wide input voltage range compensation in DC/DC resonant architectures for on-board traction power supplies. *2007 European Conference on Power Electronics and Applications,* 2007
- **W. INAM et al.** Variable Frequency Multiplier Technique for High-Efficiency Conversion Over a Wide Operating Range. *Electronics,* June 2016, vol. 4 (2), 335-343
- **A.Z. LI et al.** Research on Dual-Operation Mode of 3-level LLC resonant converter. *2015 9th International Conference on Power Electronics and ECCE Asia (ICPE-ECCE Asia),* 2015
- **D. LIU et al.** Periodically Swapping Modulation (PSM) Strategy for Three-Level (TL) DC/DC Converters With Balanced Switch Currents. *IEEE Transactions on Industrial Electronics,* January 2018, vol. 65 (1), 412-423